# EUROPEAN PATENT SPECIFICATION

(11) **EP 3 905 576 B1**
(45) Date of publication and mention of the grant of the patent: **05.04.2023**
(21) Application number: 20748410.6
(22) Date of filing: 22.01.2020
(51) Int. Cl.: H04W 48/16, H04W 48/12

(54) **MESSAGE SENDING METHOD AND DEVICE**
NACHRICHTENSENDEVERFAHREN UND -VORRICHTUNG
PROCÉDÉ ET DISPOSITIF D'ENVOI DE MESSAGES

(30) Priority: 31.01.2019 CN 201910095366
(43) Date of publication of application: 03.11.2021
(73) Proprietor: Huawei Technologies Co., Ltd., Longgang District, Shenzhen, Guangdong 518129 (CN)
(72) Inventor: YAO, Chuting, Shenzhen, Guangdong 518129 (CN); WANG, Jian, Shenzhen, Guangdong 518129 (CN); LI, Bingzhao, Shenzhen, Guangdong 518129 (CN); CHEN, Lei, Shenzhen, Guangdong 518129 (CN)
(74) Representative: Gill Jennings & Every LLP
(86) International application number: PCT/CN2020/073676
(87) International publication number: WO 2020/156399

(56) References cited:
- WO-A1-2015/116870
- WO-A1-2018/030867
- WO-A1-2018/037599
- WO-A1-2018/082849
- CN-A- 106 604 356
- CN-A- 107 404 737
- CN-A- 109 756 449
- CN-A- 109 842 917
- US-A1- 2017 367 036
- US-A1- 2018 343 608
- US-A1- 2018 368 053
- ANONYMOUS: "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.4.0, 14 January 2019 (2019-01-14), pages 1-474, XP051591713,

## Description

### TECHNICAL FIELD

This application relates to the field of communications technologies, and in particular, to a message sending method and a device.

### BACKGROUND

Currently, operators have two choices for evolution of a 5th generation (the 5th generation, 5G) mobile communications technology. One is to use a non-standalone (non- standalone, NSA) network deployment mode. To be specific, a base station currently supporting a 4th generation (the 4th generation, 4G) mobile communications technology is an evolved NodeB (evolved NodeB, eNodeB) connected to an evolved packet core (evolved packet core, EPC). The operators deploy a next generation NodeB (next generation nodeB, gNB) connected to the EPC, so that the gNB is used as a secondary eNodeB of the eNB to provide an air interface service of 5G. The other is to use a standalone (standalone, SA) network deployment mode in which a gNB connected to a 5G core network (5GC) is directly deployed.

According to the current network deployment scenarios considered by the operators, the NSA network deployment mode and the SA network deployment mode may be used at the same time. For example, in consideration of coverage of a current 4G network, the NSA network deployment mode is used to provide a 5G service for a terminal device that provides an enhanced mobile broadband (enhance mobile broadband, eMBB) service. In some new 5G application scenarios, such as industrial networks and enterprise networks, a service (such as an ultra-reliable low-latency communication (ultra-reliable low-latency communication, URLLC) service or a massive machine-type communications (massive machine-type of communication, mMTC) service) requires slicing (slicing) support for SA deployment, that is, a new radio (new radio, NR) base station connected to the 5G core network is deployed.

When the operators have two network deployment cases, if a terminal device moves to an overlapping coverage area of a 5G network and a 4G network, that is, an overlapping coverage area of an SA network deployment mode and an NSA network deployment mode, the terminal device preferentially accesses the 5G network deployed in the SA network deployment mode. However, when the operators deploy a 5G network in an SA network deployment mode, some base stations in the 5G network may provide only a specific service, for example, provide only a URLLC service. If a terminal device that camps on the base station requires another service, for example, requires an eMBB service, the base station cannot provide the service. Consequently, the terminal device cannot directly initiate a service request and cannot normally work, and user experience is very poor.

US 2018/343608 A1, WO 2018/030867 A1, US 2018/368053 A1 and WO 2018/037599 A1 discuss wireless communication methods including sending by a network device, the services supported by the network device.

### SUMMARY

Embodiments of this application provide a message sending method and a device, to enable a terminal device to work normally.

According to a first aspect, a first message sending method is provided according to claim 1. The method includes: generating a first message, where the first message includes K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M; and sending the first message in a first cell.

In this embodiment of this application, the first message may include the K pieces of indication information, and each piece of indication information may be used to indicate whether one cell or one frequency supports one or more services. After receiving the first message, a terminal device may determine whether a corresponding cell or frequency supports a corresponding service. Therefore, the terminal device may select not to camp on the cell or the frequency. Alternatively, if the terminal device has camped on the cell or the frequency, the terminal device may access another cell or frequency through cell reselection or the like. In this way, the terminal device may select to access a cell or a frequency that can provide a service required by the terminal device, so that the terminal device can work normally, and user experience is improved. For the network device, because the provided service can be used by the terminal device, resource utilization is also improved.

With reference to the first aspect, the one or more services include at least one of the following: a URLLC service, an eMBB service, and an mMTC service and a V2X service.

For example, if the one or more services are specifically one service, the service may be a URLLC service, an eMBB service, an mMTC service, or a V2X service. Alternatively, if the one or more services are specifically a plurality of services, the plurality of services may include a URLLC service and an eMBB service, or a URLLC service and an mMTC service, or an eMBB service and an mMTC service, or a URLLC service, an eMBB service, and an mMTC service, or a URLLC service and a V2X service, or an eMBB service and a V2X service, or an mMTC service and a V2X service, or a URLLC service, an eMBB service, and a V2X service, or a URLLC service, an mMTC service, and a V2X service, or an mMTC service, an eMBB service, and a V2X service, or a URLLC service, an eMBB service, a V2X service, and an mMTC service, or may include at least one of the four services, and a service other than the four services, for example, include a URLLC service and a V2X service, and a service other than the four services.

With reference to the first aspect, in a first possible implementation of the first aspect, each of the K pieces of indication information is used to indicate whether one neighboring cell or one neighboring frequency supports one or more services.

For example, currently the network device sends neighboring cell information by using a system message. In this case, the K pieces of indication information may be added to the neighboring cell information. The K pieces of indication information correspond to M pieces of neighboring cell information in the neighboring cell information, the K pieces of indication information are used to indicate whether each of the M pieces of neighboring cell information supports a corresponding service, and one of the M pieces of neighboring cell information may correspond to one or more pieces of indication information. Alternatively, currently the network device sends neighboring frequency information by using a system message. In this case, the K pieces of indication information may be added to the neighboring frequency information. The K pieces of indication information correspond to M pieces of neighboring frequency information in the neighboring frequency information, the K pieces of indication information are used to indicate whether each of the M pieces of neighboring frequency information supports a corresponding service, and one of the M pieces of neighboring frequency information may correspond to one or more pieces of indication information. In this way, when performing cell reselection or cell handover, the terminal device may reselect or hand over to a cell that can support a service required by the terminal device, as much as possible based on the K pieces of indication information, so that the terminal device can work normally.

With reference to the first aspect, in a second possible implementation of the first aspect, the indication information is used to indicate whether the first cell supports one or more services.

The first cell is, for example, a serving cell of the terminal device, and the K pieces of indication information may be used to indicate whether the first cell supports one or more services, so that the terminal device can determine, based on the K pieces of indication information, whether the first cell supports a service required by the terminal device. If the first cell does not support the service required by the terminal device, the terminal device may consider reselecting or handing over to another cell, so that the terminal device can normally perform the service required by the terminal device.

With reference to the first aspect, or the second possible implementation of the first aspect, in a third possible implementation of the first aspect,
one of the K pieces of indication information includes N bits, where the N bits are used to indicate whether the first cell supports N services, each bit is used to indicate one service, and N is a positive integer; or
one of the K pieces of indication information includes H bits, where the H bits are used to indicate whether the first cell supports N services, each bit is used to indicate one or more services, H is a positive integer, N is an integer greater than or equal to 2, and H is less than N.

For example, one bit may be used to indicate one service. This indication manner is relatively clear, and whether the first cell supports a corresponding service may be determined by using different bits included in the indication information. Alternatively, one bit may be used to indicate a plurality of services. In this way, a relatively large quantity of services can be indicated by using a relatively small quantity of bits, and a quantity of bits of the indication information can be reduced while indication is completed. This helps reduce signaling overheads.

With reference to any one of the first aspect, or the first possible implementation of the first aspect to the fourth possible implementation of the first aspect, in a fifth possible implementation of the first aspect, the method further includes: sending a second message in the first cell, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

In some cases, a cell or a frequency may support a service in a period of time, but does not support the service in another period of time. For example, a cell originally supports a URLLC service and an eMBB service, but the cell may have a relatively high requirement for the URLLC service in a period of time. In this case, the cell may stop supporting the eMBB service and supports only the URLLC service in this period of time. However, after this period of time, the cell may resume supporting the eMBB service. Therefore, in this embodiment of this application, in consideration of this feature of the cell or the frequency, time information is added to corresponding indication information or a corresponding service, so that a time limit is added for a cell or a frequency about whether a corresponding service is supported. The cell or the frequency supports the corresponding service within the time limit, and the cell or the frequency does not support the corresponding service beyond the time limit. Alternatively, the cell or the frequency does not support the corresponding service within the time limit, and the cell or the frequency supports the corresponding service beyond the time limit. Therefore, indication about whether a cell supports some services is more practical.

With reference to the first aspect, or the second possible implementation of the first aspect to the fourth possible implementation of the first aspect, in a fifth possible implementation of the first aspect, the method further includes: sending a SIB 1 message in the first cell, where a cellreservedforotheruse field in the SIB 1 is used to indicate that camping of a terminal device is rejected.

A terminal device of an earlier version possibly cannot identify the indication information provided in this embodiment of this application, and therefore possibly cannot determine, according to the solution in this embodiment of this application, whether a corresponding cell or frequency supports a corresponding service. In view of this, it may be considered that the technical solution provided in this embodiment of this application is applied only to a terminal device of a new version. In this case, because the terminal device of the earlier version cannot identify the indication information provided in this embodiment of this application, the terminal device may still access a cell that does not support a service required by the terminal device. Consequently, the terminal device cannot work normally. Therefore, the network device may further send a system message in the first cell, for example, the SIB1. The cellreservedforotheruse field in the SIB 1 is used to indicate that camping of the terminal device is rejected. After the terminal device receives the SIB 1 from the network device, if the terminal device is a terminal device of an earlier version, the terminal device may determine, based on the cellreservedforotheruse field, that camping on the first cell is rejected. Therefore, the terminal device may not camp on the first cell, but may reselect to camp on another cell. In this case, regardless of whether the first cell can provide a service required by the terminal device of the earlier version, camping of the terminal device of the earlier version is rejected. Even if the first cell can provide the service required by the terminal device of the earlier version, camping on the first cell is rejected, and the terminal device may continue to select another cell, so that the terminal device can normally work in the another cell. However, in this embodiment of this application, a probability that the terminal device camps on a cell that cannot provide a service required by the terminal device can be reduced as much as possible.

With reference to any one of the first aspect to the fifth possible implementation of the first aspect, in a sixth possible implementation of the first aspect, the first message is a SIB and/or a MIB.

Specifically, the first message is a SIB or a MIB, or the first message is a SIB and a MIB. An implementation of the first information is not limited in this embodiment of this application.

With reference to any one of the first aspect to the sixth possible implementation of the first aspect, in an eighth possible implementation of the first aspect, the first message is a MIB, and a bit in cellbarred in the MIB is used for the K pieces of indication information, and/or a last bit in the MIB is used for the K pieces of indication information.

If the first message is a MIB, a possible manner in which the first message is implemented by using the MIB is provided herein, but this does not constitute a specific limitation.

According to a second aspect, a first message receiving method is provided according to claim 6. The method includes: receiving a first message from a network device; and determining, based on K pieces of indication information included in the first message, whether each of M pieces of first information supports a corresponding service, where each of the K pieces of indication information corresponds to one or more services, and is used to indicate whether one of the M pieces of first information supports the one or more services, the first information is cell information or frequency information, M is a positive integer, and K is an integer greater than or equal to M.

With reference to the second aspect, the one or more services include at least one of the following: a URLLC service, an eMBB service, an mMTC service, and a V2X service.

With reference to the second aspect, in a first possible implementation of the second aspect, each of the K pieces of indication information is used to indicate whether one neighboring cell or one neighboring frequency supports one or more services.

With reference to the second aspect, in a second possible implementation of the second aspect, the indication information is used to indicate whether a current cell supports one or more services.

With reference to the second aspect or the second possible implementation of the second aspect, in a third possible implementation of the second aspect,
one of the K pieces of indication information includes N bits, where the N bits are used to indicate whether the current cell supports N services, each bit is used to indicate one service, and N is a positive integer; or
one of the K pieces of indication information includes H bits, where the H bits are used to indicate whether the current cell supports N services, each bit is used to indicate one or more services, H is a positive integer, N is an integer greater than or equal to 2, and H is less than N.

With reference to any one of the second aspect to the third possible implementation of the second aspect, in a fourth possible implementation of the second aspect, the method further includes: receiving a second message from the network device, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

With reference to the second aspect, the method further includes: receiving a SIB1 message from the network device, where a cellreservedforotheruse field in the SIB 1 is used to indicate that camping of a terminal device is rejected.

With reference to any one of the second aspect, or the first possible implementation of the second aspect to the fifth possible implementation of the second aspect, in a sixth possible implementation of the second aspect, the first message is a SIB and/or a MIB.

With reference to any one of the second aspect, or the first possible implementation of the second aspect to the sixth possible implementation of the second aspect, in an seventh possible implementation of the second aspect, the first message is a MIB, and a bit in cellbarred in the MIB is used for the K pieces of indication information, and/or a last bit in the MIB is used for the K pieces of indication information.

With reference to any one of the second aspect, or the first possible implementation of the second aspect to the ninth possible implementation of the second aspect, in an eighth possible implementation of the second aspect, the terminal device supports a first service in the one or more services, and the method further includes: when performing cell reselection or cell handover, determining, based on the K pieces of first information, whether a second cell supports the first service.

With reference to the eighth possible implementation of the second aspect, in a ninth possible implementation of the second aspect, the method further includes:
when the second cell does not support the first service, determining not to reselect or hand over to the second cell; or
when the second cell does not support the first service, setting a priority of the second cell to a low priority, where the priority of the second cell is used as a sequence of selecting the second cell by the terminal device during cell reselection or handover.

If the terminal device determines that the second cell does not support the first service, the terminal device may not hand over to or reselect the second cell. In other words, the terminal device can hand over to or reselect a cell that can support a service required by the terminal device, as much as possible, thereby ensuring that the terminal device can work normally. Alternatively, if the terminal device determines that the second cell does not support the first service, the terminal device may set the priority of the second cell to a low priority, so that the terminal device can select the second cell based on a relatively low priority during reselection or handover, thereby reducing a probability that the terminal device selects the second cell. In this way, the terminal device can hand over to or reselect a cell that can support a service required by the terminal device, as much as possible, thereby ensuring that the terminal device can work normally.

For technical effects brought by the second aspect or the possible implementations of the second aspect, refer to the descriptions of the technical effects of the first aspect or the implementations of the first aspect.

According to a third aspect, a second message receiving method not forming part of the claimed invention, is provided. The method includes: receiving a first message from a network device; and determining, based on K pieces of first information included in the first message, whether each of the K pieces of first information supports or does not support a first service, where the first information is cell information or frequency information, and K is a positive integer.

With reference to the third aspect, in a first possible implementation of the fourth aspect, a terminal device supports the first service, and the method further includes: when performing cell reselection or cell handover, determining, based on the K pieces of first information, whether a first cell supports the first service.

With reference to the first possible implementation of the third aspect, in a second possible implementation of the fourth aspect, the method further includes:
when the first cell does not support the first service, determining not to reselect or hand over to the first cell; or
when the first cell does not support the first service, setting a priority of the first cell to a low priority, where the priority of the first cell is used as a sequence of selecting the first cell by the terminal device during cell reselection or handover.

If the terminal device determines that the second cell does not support the first service, the terminal device may not hand over to or reselect the second cell. In other words, the terminal device can hand over to or reselect a cell that can support a service required by the terminal device, as much as possible, thereby ensuring that the terminal device can work normally. Alternatively, if the terminal device determines that the second cell does not support the first service, the terminal device may set the priority of the second cell to a low priority, so that the terminal device can select the second cell based on a relatively low priority during reselection or handover, thereby reducing a probability that the terminal device selects the second cell. In this way, the terminal device can hand over to or reselect a cell that can support a service required by the terminal device, as much as possible, thereby ensuring that the terminal device can work normally.

For technical effects brought by the fourth aspect or the possible implementations of the third aspect, refer to the descriptions of the technical effects of the first aspect or the implementations of the first aspect.

According to a fourth aspect, a first communications apparatus is provided according to claim 11. For example, the communications apparatus is the first communications apparatus described above. The communications apparatus is configured to perform the method in any one of the first aspect or the possible implementations of the first aspect. Specifically, the communications apparatus may include modules configured to perform the method in any one of the first aspect or the possible implementations of the first aspect, for example, include a processing module and a transceiver module that are coupled to each other. The communications apparatus is a network device.

The processing module is configured to generate a first message, where the first message includes K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M.

The transceiver module is configured to send the first message in a first cell.

With reference to the fourth aspect, the one or more services include at least one of the following: a URLLC service, an eMBB service, and an mMTC service.

With reference to the fourth aspect or the first possible implementation of the fourth aspect, in a second possible implementation of the fourth aspect, each of the K pieces of indication information is used to indicate whether one neighboring cell or one neighboring frequency supports one or more services.

With reference to the fourth aspect or the first possible implementation of the fourth aspect, in a third possible implementation of the fourth aspect, the indication information is used to indicate whether the first cell supports one or more services.

With reference to the fourth aspect, the first possible implementation of the fourth aspect, or the third possible implementation of the fourth aspect, in a fourth possible implementation of the fourth aspect,
one of the K pieces of indication information includes N bits, where the N bits are used to indicate whether the first cell supports N services, each bit is used to indicate one service, and N is a positive integer; or
one of the K pieces of indication information includes H bits, where the H bits are used to indicate whether the first cell supports N services, each bit is used to indicate one or more services, H is a positive integer, N is an integer greater than or equal to 2, and H is less than N.

With reference to any one of the fourth aspect, or the first possible implementation of the fourth aspect to the fourth possible implementation of the fourth aspect, in a fifth possible implementation of the fourth aspect, the transceiver module is further configured to send a second message in the first cell, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

With reference to any one of the fourth aspect, the first possible implementation of the fourth aspect, or the third possible implementation of the fourth aspect to the fifth possible implementation of the fourth aspect, the transceiver module is further configured to send a SIB 1 message in the first cell, where a cellreservedforotheruse field in the SIB 1 is used to indicate that camping of a terminal device is rejected.

With reference to any one of the fourth aspect, or the first possible implementation of the fourth aspect to the fifth possible implementation of the fourth aspect, in a sixth possible implementation of the fourth aspect, the first message is a SIB and/or a MIB.

With reference to any one of the fourth aspect, or the first possible implementation of the fourth aspect to the sixth possible implementation of the fourth aspect, in an seventh possible implementation of the fourth aspect, the first message is a MIB, and a bit in cellbarred in the MIB is used for the K pieces of indication information, and/or a last bit in the MIB is used for the K pieces of indication information.

For technical effects brought by the fourth aspect or the possible implementations of the fourth aspect, refer to the descriptions of the technical effects of the first aspect or the implementations of the first aspect.

In the embodiments of this application, the terminal device can access, as much as possible, a cell or a frequency that can provide a service required by the terminal device, so that the terminal device can work normally, and user experience is improved. For the network device, because the provided service can be used by the terminal device, resource utilization is also improved.

### BRIEF DESCRIPTION OF DRAWINGS

FIG. 1 is a schematic diagram of deploying both an NSA network deployment mode and an SA network deployment mode;
FIG. 2 is a schematic diagram of an application scenario according to an embodiment of this application;
FIG. 3 is a flowchart of a first message sending and receiving method according to an embodiment of this application;
FIG. 4 is a flowchart of a second message sending and receiving method according to an embodiment of this application;
FIG. 5 is a schematic structural diagram of a communications apparatus according to an embodiment of this application; and
FIG. 6A and FIG. 6B are two schematic structural diagrams of a communications apparatus according to an embodiment of this application.

### DESCRIPTION OF EMBODIMENTS

To make objectives, technical solutions, and advantages of the embodiments of this application clearer, the following further describes the embodiments of this application in detail with reference to the accompanying drawings.

In the following, some terms in the embodiments of this application are described, to facilitate understanding of a person skilled in the art.
(1) Terminal device: The terminal device includes a device that provides a user with voice and/or data connectivity, for example, may include a handheld device having a wireless connection function, or a processing device connected to a wireless modem. The terminal device may communicate with a core network over a radio access network (radio access network, RAN), and exchange voice and/or data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, loT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device is a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device may be an information sensing device such as a barcode reader, radio frequency identification (radio frequency identification, RFID) device, a sensor, a global positioning system (global positioning system, GPS), or a laser scanner.

By way of example and not limitation, in the embodiments of this application, the terminal device may alternatively be a wearable device. The wearable device may also be referred to as a wearable intelligent device, an intelligent wearable device, or the like, and is a generic term for wearable devices that are developed by using wearable technologies to intelligently design daily wear, such as glasses, gloves, watches, clothes, and shoes. The wearable device is a portable device that can be directly worn or integrated into clothes or accessories of a user. The wearable device is not merely a hardware device, but is used to implement a powerful function through software support, data exchange, and cloud interaction. In a broader sense, the wearable intelligent device is full-featured, has a large size, and can implement all or some functions without depending on a smartphone. For example, the wearable intelligent device is a smart watch or smart glasses. Alternatively, the wearable intelligent device focuses only on a specific application function, and needs to be used with another device such as a smartphone. For example, the wearable intelligent device is a smart wristband, a smart helmet, or smart jewelry for physical sign monitoring.

However, if the various terminal devices described above are located on a vehicle (for example, placed in the vehicle or installed in the vehicle), the terminal devices may be considered as vehicle-mounted terminal devices. For example, the vehicle-mounted terminal devices are also referred to as on-board units (on-board unit, OBU).

(2) Network device: The network device includes, for example, an access network (access network, AN) device such as a base station (for example, an access point), and may be a device that communicates with a wireless terminal device over an air interface by using one or more cells in an access network. Alternatively, a network device in a V2X technology is, for example, a road side unit (road side unit, RSU). The base station may be configured to perform conversion between a received over-the-air frame and a received internet protocol (IP) packet, and is used as a router between the terminal device and the rest of the access network. The rest of the access network may include an IP network. The RSU may be a fixed infrastructure entity supporting V2X application, and may exchange a message with another entity supporting V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, or may include a next generation NodeB (next generation NodeB, gNB) in a 5G NR system, or may include a centralized unit (centralized unit, CU) and a distributed unit (distributed unit, DU) in a cloud radio access network (cloud radio access network, Cloud RAN) system. This is not limited in the embodiments of this application.

(3) The terms "system" and "network" may be used interchangeably in the embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof means any combination of the following, including one or any combination of the following. For example, at least one (piece) of a, b, or c may indicate a, b, c, a and b, a and c, b and c, or a, b, and c, where a, b, and c may be singular or plural.

In addition, unless otherwise stated, ordinal numbers such as "first" and "second" in the embodiments of this application are used to distinguish between a plurality of objects, but are not intended to limit a sequence, a time sequence, priorities, or importance of the plurality of objects. For example, a first message and a second message are merely intended to distinguish between different messages, but do not indicate that the two messages are different in content, priorities, a sending sequence, or importance.

The foregoing describes some concepts in the embodiments of this application. The following describes technical features in the embodiments of this application.

Currently, operators have two choices for evolution of 5G. One is to use an NSA network deployment mode. To be specific, a base station currently supporting 4G is an eNodeB connected to an EPC. The operators deploy a gNB connected to the EPC, so that the gNB is used as a secondary eNodeB of the eNB to provide an air interface service of 5G. The other is to use an SA network deployment mode in which a gNB connected to a 5GC is directly deployed. The SA network deployment mode may further support some new 5G application scenarios, for example, slicing, which may be understood as providing a dedicated resource for a user who spends money, to provide better quality of service (quality of service, QoS) for the user.

According to the current network deployment scenarios considered by the operators, the NSA network deployment mode and the SA network deployment mode may be used at the same time. For example, in consideration of coverage of a current 4G network, the NSA network deployment mode is used to provide a 5G service for a terminal device that provides an eMBB service. In some new 5G application scenarios, such as industrial networks and enterprise networks, a service (such as a URLLC service or an mMTC service) requires slicing support for SA deployment, that is, an NR base station connected to the 5G core network is deployed.

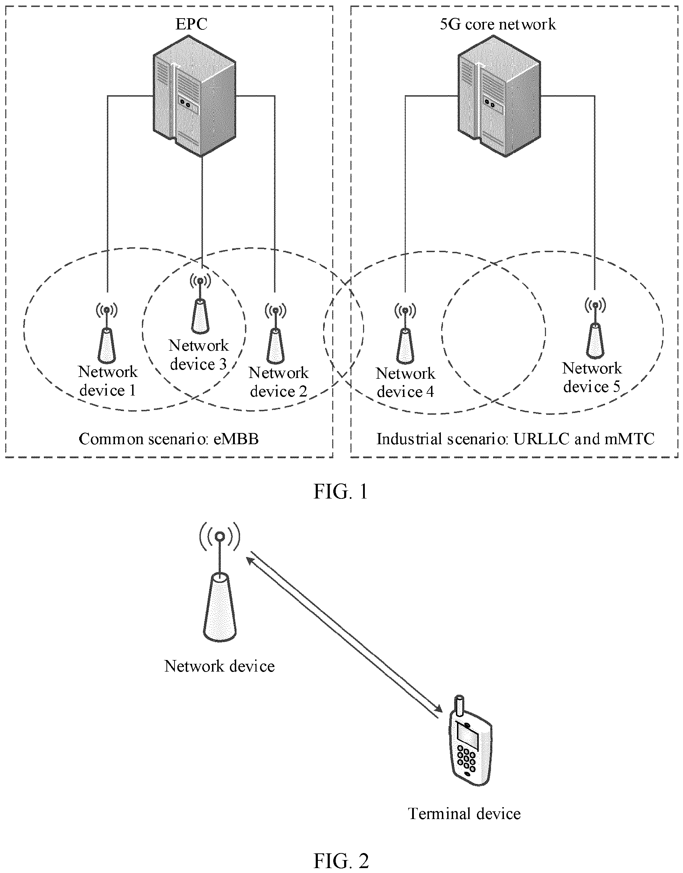

FIG. 1 is a schematic diagram of deploying two network deployment modes. For example, a 4G network can provide an eMBB service in a common scenario, and a 5G network can provide a URLLC service and an mMTC service that are applicable to an industrial scenario. In FIG. 1, the 4G network is an NSA network deployment mode, both a network device 1 and a network device 2 are eNBs, and a network device 3 is a gNB connected to an EPC; and the 5G network is an SA network deployment mode, and both a network device 4 and a network device 5 are gNBs directly connected to a 5GC.

In a current SA network deployment mode, a base station may perform access rejection or access control on a terminal device by broadcasting system information. The system information that is broadcast by the base station includes a master information block (master information block, MIB) and a system information block (system information block, SIB). The terminal device may obtain a read location of the SIB1 by reading the MIB, and may obtain a read location of another SIB by reading the SIB1.

The base station may reject access of the terminal device mainly in the following manners:
1. By setting cellbarred (cellbarred) in the MIB, camping of all terminals can be rejected.
   A value of cellbarred may be set to "barred" (barred) or "not barred" (not barred). If the value of cellbarred is set to "barred", access of all terminal devices on acell is rejected.
2. The SIB1 includes cell access-related information (cellaccessrelatedinfo), and cellaccessrelatedinfo includes a cellreservedforotheruse (cellreservedforotheruse) field. By setting a value of the cellreservedforotheruse field, camping of all terminal devices on a cell can be rejected.

Access control means that, for a terminal device that has camped on a current cell, the base station may provide related information of a public land mobile network (public land mobile network, PLMN) and an access category (access category, AC) by using uac-BarringInfo in the SIB1, and based on the related information, the terminal device determines, in probability, whether to initiate a service request and determines frequency of initiating a service request. In a simple example, if the terminal device belongs to M-Zone (which is an AC defined by an operator) of China Mobile (which is a PLMN), when a cell is relatively busy, for example, the cell is a concert place, and the cell is relatively busy when a concert is held, the base station restricts the terminal device from initiating a service, and sets a probability for the terminal device to prevent the terminal device from initiating a service. For example, a threshold is configured for the terminal device, and a value range of the threshold is, for example, [0, 1]. If the terminal device wants to initiate a service (for example, make a call), the terminal device needs to randomly generate a random number from 0 to 1. The terminal device can initiate random access only when the generated random number is less than the threshold configured by the base station. If the generated random number is greater than the threshold, a timer needs to be started, and the terminal device can generate a random number again only when the timer expires. In this manner, frequency at which the terminal device camping on the current cell initiates a service request can be controlled.

When operators have two network deployment cases, if a terminal device moves to an overlapping coverage area of a 5G network and a 4G network, that is, an overlapping coverage area of an SA network deployment mode and an NSA network deployment mode, the terminal device preferentially accesses the 5G network deployed in the SA network deployment mode. However, when the operators deploy a 5G network in an SA network deployment mode, some base stations in the 5G network may provide only a specific service, for example, provide only a URLLC service. If the base station rejects camping of the terminal device in the prior-art manner, camping of all terminal devices is rejected. However, the base station needs to provide services for some terminal devices. Therefore, the base station cannot select to reject camping of the terminal device. If a terminal device that camps on the base station requires another service, for example, requires an eMBB service, the base station cannot provide the service. Consequently, the terminal device cannot work normally.

In view of this, technical solutions in the embodiments of this application are provided. In the embodiments of this application, for example, a network device may send a first message. The first message may include K pieces of indication information, and each piece of indication information may be used to indicate whether one cell or one frequency supports one or more services. After receiving the first message, a terminal device may determine whether a corresponding cell or frequency supports a corresponding service. Therefore, the terminal device may select not to camp on the cell or the frequency. Alternatively, if the terminal device has camped on the cell or the frequency, the terminal device may access another cell or frequency through cell reselection or the like. In this way, the terminal device may select to access a cell or a frequency that can provide a service required by the terminal device, so that the terminal device can work normally. For the network device, because the provided service can be used by the terminal device, resource utilization is also improved.

The technical solutions provided in the embodiments of this application may be applied to a 4G system, for example, an LTE system, or may be applied to a 5G system, for example, an NR system, or may be applied to a next generation mobile communications system or another similar communications system. This is not specifically limited.

FIG. 2 shows an application scenario according to an embodiment of this application. FIG. 2 includes one network device and one terminal device. For example, the network device works in an evolved universal mobile telecommunications system terrestrial radio access (evolved UMTS terrestrial radio access, E-UTRA) system, or an NR system. The network device may be a network device in either of an NSA network deployment mode and an SA network deployment mode, or may be a network device in an NSA network deployment mode, or may be a network device in an SA network deployment mode. Certainly, in this embodiment of this application, one network device may serve a plurality of terminal devices. In FIG. 2, only one of the terminal devices is used as an example.

The network device in FIG. 2 is, for example, a base station. The network device corresponds to different devices in different systems. For example, the network device may correspond to an eNB in a 4G system, and corresponds to a 5G network device in a 5G system, for example, a gNB.

The following describes the technical solutions provided in the embodiments of this application with reference to the accompanying drawings.

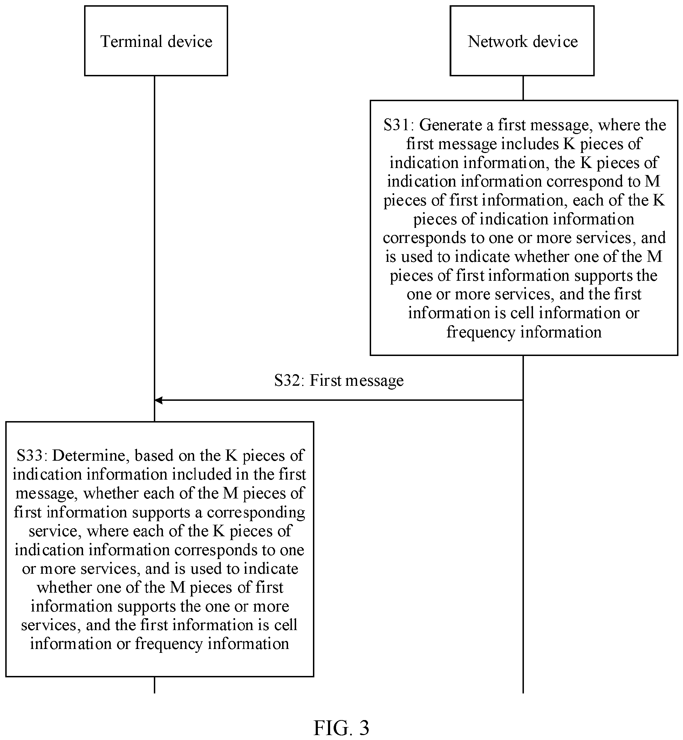

An embodiment of this application provides a first message sending and receiving method. FIG. 3 is a flowchart of the method. In the following description process, an example in which the method is applied to the network architecture shown in FIG. 2 is used. In addition, the method may be performed by two communications apparatuses. The two communications apparatuses are, for example, a first communications apparatus and a second communications apparatus. The first communications apparatus may be a network device or a communications apparatus that can support a network device in implementing a function required for the method, or the first communications apparatus may be a terminal device or a communications apparatus that can support a terminal device in implementing a function required for the method. Certainly, the first communications apparatus may alternatively be another communications apparatus, for example, a chip system. Similarly, the second communications apparatus may be a network device or a communications apparatus that can support a network device in implementing a function required for the method, or the second communications apparatus may be a terminal device or a communications apparatus that can support a terminal device in implementing a function required for the method. Certainly, the second communications apparatus may alternatively be another communications apparatus, for example, a chip system. In addition, implementations of the first communications apparatus and the second communications apparatus are not limited. For example, the first communications apparatus may be a network device, and the second communications apparatus is a terminal device; or both the first communications apparatus and the second communications apparatus are network devices; or both the first communications apparatus and the second communications apparatus are terminal devices; or the first communications apparatus is a network device, and the second communications apparatus is a communications apparatus that can support a terminal device in implementing a function required for the method. The network device is, for example, a base station.

For ease of description, the following uses an example in which the method is performed by a network device and a terminal device, that is, an example in which the first communications apparatus is the network device and the second communications apparatus is the terminal device. If this embodiment is applied to the network architecture shown in FIG. 2, the following network device configured to perform the embodiment shown in FIG. 3 may be the network device in the network architecture shown in FIG. 2, and the following terminal device may be the terminal device in the network architecture shown in FIG. 2.

S31: The network device generates a first message, where the first message includes K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M.

For example, each of the K pieces of indication information may correspond to one piece of first information, and each of the M pieces of first information may correspond to one or more pieces of indication information. One piece of indication information may correspond to one or more services. Because the indication information is used to indicate whether one of the M pieces of first information supports one or more services, that the indication information "corresponds to" one or more services may be understood as that the indication information "indicates" one or more services, that is, indicates whether the first information supports the one or more services. In this embodiment of this application, the one or more services includes at least one of the following: a URLLC service, an eMBB service, an mMTC service, and a V2X service. For example, if the one or more services are specifically one service, the service may be a URLLC service, an eMBB service, an mMTC service, or a V2X service. Alternatively, if the one or more services are specifically a plurality of services, the plurality of services may include a URLLC service and an eMBB service, or a URLLC service and an mMTC service, or an eMBB service and an mMTC service, or a URLLC service, an eMBB service, and an mMTC service, or a URLLC service and a V2X service, or an eMBB service and a V2X service, or an mMTC service and a V2X service, or a URLLC service, an eMBB service, and a V2X service, or a URLLC service, an mMTC service, and a V2X service, or an mMTC service, an eMBB service, and a V2X service, or a URLLC service, an eMBB service, a V2X service, and an mMTC service, or may include at least one of the four services, and a service other than the four services, for example, include a URLLC service and a V2X service, and a service other than the four services.

In a first indication manner of the indication information, each of the K pieces of indication information may be used to indicate whether a current cell supports one or more services. The current cell may be a cell in which the network device sends the first message, that is, the network device sends the first message in the current cell. Alternatively, in this specification, the current cell may also be referred to as a first cell. In this case, M may be 1, and the first information may be cell information.

For example, a value of K may be equal to a quantity of services that need to be indicated. For example, the quantity of services that need to be indicated is N, N is a positive integer, and K=N. For example, if N = 4, and the four services are a URLLC service, an eMBB service, an mMTC service, and a V2X service, K may also be equal to 4. In this case, the first cell may correspond to four pieces of indication information, and the four pieces of indication information are indication information 1, indication information 2, indication information 3, and indication information 4. Indication information is in a one-to-one correspondence with a service that needs to be indicated. For example, in the four pieces of indication information, the indication information 1 corresponds to the URLLC service, the indication information 2 corresponds to the eMBB service, the indication information 3 corresponds to the mMTC service, and the indication information 4 corresponds to the V2X service. The indication information 1 is used to indicate whether the first cell supports the URLLC service, the indication information 2 is used to indicate whether the first cell supports the eMBB service, the indication information 3 is used to indicate whether the first cell supports the mMTC service, and the indication information 4 is used to indicate whether the first cell supports the V2X service. For example, each of the K pieces of indication information may include one bit (bit). The indication information 1 is used as an example. For example, if a value of one bit in the indication information 1 is "1", it indicates that the first cell supports the URLLC service, or if a value of one bit in the indication information 1 is "0", it indicates that the first cell does not support the URLLC service. Alternatively, a value of the one bit may be "1" or "0, and if the network device sends the indication information 1, it indicates that the first cell supports the URLLC service, or if the network device does not send the indication information 1, it indicates that the first cell does not support the URLLC service. An indication manner of the other indication information is similar. The indication information is in a one-to-one correspondence with the service that needs to be indicated, so that clearer indication can be implemented.

Alternatively, a value of K may be less than a quantity of services that need to be indicated. For example, the quantity of services that need to be indicated is N, and K < N. For example, if N = 4, and the four services are a URLLC service, an eMBB service, an mMTC service, and a V2X service, K may be less than 4. For example, if K = 1, the first cell may correspond to one piece of indication information, and the one piece of indication information may be used to indicate the four services. For example, a quantity of bits included in the indication information may be equal to the quantity of services that need to be indicated. For example, if the quantity N of services that need to be indicated is 4, the indication information may include four bits, and one bit in the four bits is used to indicate one service. Bits included in the indication information are in a one-to-one correspondence with services that need to be indicated. For example, in the four bits, a first bit is used to indicate whether the first cell supports the URLLC service, a second bit is used to indicate whether the first cell supports the eMBB service, a third bit is used to indicate whether the first cell supports the mMTC service, and a fourth bit is used to indicate whether the first cell supports the V2X service. The first bit is used as an example. For example, if a value of the first bit is "1", it indicates that the first cell supports the URLLC service, or if a value of the first bit is "0", it indicates that the first cell does not support the URLLC service. Alternatively, a value of the first bit may be "1" or "0", and if the indication information includes the first bit, it indicates that the first cell supports the URLLC service, or if the indication information does not include the first bit, that is, the network device does not send the first bit, it indicates that the first cell does not support the URLLC service. Indication manners of the other bits included in the indication information are similar. The first bit may be a most significant bit, a least significant bit, or a bit at any location. This is not specifically limited. The bits included in the indication information are in a one-to-one correspondence with the services that need to be indicated, so that clearer indication can be implemented.

Alternatively, a value of K is less than a quantity of services that need to be indicated. For example, N = 4, and K = 1. A quantity of bits included in the one piece of indication information may also be less than the quantity of services that need to be indicated. For example, the indication information may include H bits, H is a positive integer, and H < N. Because H < N, and N may be an integer greater than or equal to 2, each bit in the H bits may be used to indicate one or more services. For example, the four services are a URLLC service, an eMBB service, an mMTC service, and a V2X service, and the indication information includes, for example, two bits. A first bit is used to indicate whether the first cell supports the URLLC service and the eMBB service, and a second bit is used to indicate whether the first cell supports the mMTC service and the V2X service. The first bit may be a most significant bit or a least significant bit in the two bits. This is not specifically limited. The first bit is used as an example. For example, if a value of the bit is "1", it indicates that the first cell supports the URLLC service and the eMBB service, or if a value of the bit is "0", it indicates that the first cell does not support the URLLC service and the eMBB service. Alternatively, a value of the bit may be "1" or "0", and if the indication information includes the bit, it indicates that the first cell supports the URLLC service and the eMBB service, or if the indication information does not include the bit, that is, the network device does not send the bit, it indicates that the first cell does not support the URLLC service and the eMBB service. Alternatively, if a value of the bit is "1", it indicates that the first cell supports the URLLC service, or if a value of the bit is "0", it indicates that the first cell does not support the eMBB service, or the like. An indication manner of the second bit is similar. Using one bit to indicate a relatively large quantity of services helps reduce bit overheads.

Alternatively, a value of K is less than a quantity of services that need to be indicated, and a quantity of bits included in each of the K pieces of indication information may also be less than the quantity of services that need to be indicated. However, a total quantity of bits included in the K pieces of indication information is equal to the quantity of services that need to be indicated. For example, N = 4, and the four services are a URLLC service, an eMBB service, an mMTC service, and a V2X service; and K = 2, and the first cell corresponds to two pieces of indication information: indication information 1 and indication information 2. The indication information 1 includes two bits, and the indication information 2 also includes two bits. It can be learned that a total quantity of bits included in the two pieces of indication information is equal to the quantity of services that need to be indicated. In this case, bits included in the indication information may be in a one-to-one correspondence with services that need to be indicated. In this case, for an indication manner of the indication information for a service, refer to the foregoing similar descriptions.

Alternatively, a value of K is less than a quantity of services that need to be indicated, a quantity of bits included in each of the K pieces of indication information may also be less than the quantity of services that need to be indicated, and a total quantity of bits included in the K pieces of indication information is also less than the quantity of services that need to be indicated. For example, N = 4, and the four services are a URLLC service, an eMBB service, an mMTC service, and a V2X service; and K = 2, and the first cell corresponds to two pieces of indication information: indication information 1 and indication information 2. The indication information 1 includes two bits, and the indication information 2 includes one bit. It can be learned that a total quantity of bits included in the two pieces of indication information is less than a quantity of services that need to be indicated. In this case, each of the at least one bit included in the two pieces of indication information may be used to indicate the at least two services. For example, a first bit included in the indication information 1 may be used to indicate whether the first cell supports the URLLC service, a second bit included in the indication information 1 may be used to indicate whether the first cell supports the eMBB service, and a first bit included in the indication information 2 may be used to indicate whether the first cell supports the mMTC service and the V2X service. For specific indication manners of these bits, refer to the foregoing similar descriptions.

In a second indication manner of the indication information, each of the K pieces of indication information may be used to indicate whether a frequency of a current cell supports one or more services. In this case, M may be 1, and the first information may be frequency information. For a specific indication manner of the indication information, refer to the foregoing descriptions when the first information is the cell information. The indication manner is similar, and only the foregoing "first cell" needs to be replaced with the "frequency of the first cell".

In a third indication manner of the indication information, each of the K pieces of indication information may be used to indicate whether a neighboring cell supports one or more services.

Currently, the network device sends neighboring cell information by using a system message. In this case, the K pieces of indication information may be added to the neighboring cell information. The K pieces of indication information correspond to M pieces of neighboring cell information in the neighboring cell information, the K pieces of indication information are used to indicate whether each of the M pieces of neighboring cell information supports a corresponding service, and one of the M pieces of neighboring cell information may correspond to one or more pieces of indication information. M is less than or equal to a quantity of neighboring cells included in the neighboring cell information sent by the network device.

For example, one piece of indication information may be added to each of the M pieces of neighboring cell information. In this case, K = M. A quantity of bits included in one piece of indication information may be equal to a quantity of services supported by neighboring cell information corresponding to the indication information, or equal to a quantity of services that need to be indicated. For example, if services that need to be indicated are a URLLC service, an eMBB service, and a V2X service, one piece of indication information may be added to each piece of neighboring cell information, and each piece of indication information includes three bits. The three bits are in a one-to-one correspondence with the three services. For a specific indication manner of each piece of indication information, refer to the foregoing similar descriptions.

Alternatively, one piece of indication information may be added to each of the M pieces of neighboring cell information. A quantity of bits included in one piece of indication information may be less than a quantity of services supported by neighboring cell information corresponding to the indication information, or less than a quantity of services that need to be indicated. For example, if services that need to be indicated are a URLLC service, an eMBB service, and a V2X service, one piece of indication information may be added to each piece of neighboring cell information, and a quantity of bits included in each piece of indication information is less than 3. Quantities of bits included in different pieces of indication information may be the same or may be different. For example, if services that need to be indicated are a URLLC service, an eMBB service, and a V2X service, one piece of indication information may be added to each piece of neighboring cell information. For example, each piece of indication information includes two bits. A first bit in the two bits is used to indicate whether corresponding neighboring cell information supports the URLLC service and the eMBB service, a second bit in the two bits is used to indicate whether corresponding neighboring cell information supports the V2X service. For a specific indication manner of the indication information, refer to the foregoing similar descriptions.

Alternatively, one piece of indication information may be added to each of the M pieces of neighboring cell information. A quantity of bits included in one piece of indication information may be less than or equal to a quantity of services that need to be indicated. Quantities of bits included in different pieces of indication information corresponding to different pieces of neighboring cell information may be the same or may be different. For example, if services that need to be indicated are a URLLC service, an eMBB service, and a V2X service, one piece of indication information may be added to each piece of neighboring cell information. A quantity of bits included in each of some pieces of indication information is equal to 3, and a quantity of bits included in each of the other pieces of indication information is less than 3. In addition, for the other pieces of indication information, quantities of bits included in different pieces of indication information may be the same or may be different. For example, each of the other pieces of indication information may include one bit, or each of a first part of the other pieces of indication information includes one bit, and each of a second part of the other pieces of indication information includes two bits.

For example, one piece of indication information may be added to each piece of neighboring cell information. For example, each of some pieces of indication information includes four bits, and the four bits are in a one-to-one correspondence with the four services. For a specific indication manner of each piece of indication information, refer to the foregoing similar descriptions. A quantity of bits included in each of the other pieces indication information is less than 4. For example, each of the other pieces of indication information includes two bits. For example, a first bit in the two bits is used to indicate whether corresponding neighboring cell information supports the URLLC service and the eMBB service, and a second bit in the two bits is used to indicate whether corresponding neighboring cell information supports the mMTC service and the V2X service. For a specific bit indication manner, refer to the foregoing similar descriptions. Alternatively, each of a first part of the other pieces of indication information includes two bits, and a second bit in the two bits is used to indicate whether corresponding neighboring cell information supports the mMTC service and the V2X service. Each of a second part of the other pieces of indication information includes three bits, a first bit in the three bits is used to indicate whether corresponding neighboring cell information supports the URLLC service and the eMBB service, a second bit in the three bits is used to indicate whether corresponding neighboring cell information supports the mMTC service, and a third bit in the three bits is used to indicate whether corresponding neighboring cell information supports the V2X service. For a specific bit indication manner, refer to the foregoing similar descriptions.

Alternatively, a plurality of pieces of indication information may be added to each of the M pieces of neighboring cell information. In this case, K > M. A quantity of bits included in each piece of indication information may be less than a quantity of services supported by neighboring cell information corresponding to the indication information, or less than a quantity of services that need to be indicated. However, a total quantity of bits included in all pieces of indication information corresponding to each piece of neighboring cell information is equal to the quantity of services that need to be indicated. In this case, bits included in the indication information may be in a one-to-one correspondence with services that need to be indicated. For a specific bit indication manner, refer to the foregoing similar descriptions.

Alternatively, a plurality of pieces of indication information may be added to each of the M pieces of neighboring cell information. In this case, K > M. A quantity of bits included in each piece of indication information may be less than a quantity of services supported by neighboring cell information corresponding to the indication information, or less than a quantity of services that need to be indicated. In addition, a total quantity of bits included in all pieces of indication information corresponding to each of at least one of the M pieces of neighboring cell information is less than the quantity of services that need to be indicated. For example, a total quantity of bits included in all pieces of indication information corresponding to each of the M pieces of neighboring cell information is less than the quantity of services that need to be indicated. Alternatively, a total quantity of bits included in all pieces of indication information corresponding to each of some of the M pieces of neighboring cell information is equal to the quantity of services that need to be indicated, and a total quantity of bits included in all pieces of indication information corresponding to each of the other of the M pieces of neighboring cell information is less than the quantity of services that need to be indicated. It is assumed that a total quantity of bits included in all pieces of indication information corresponding to one piece of neighboring cell information is equal to a quantity of services that need to be indicated. In this case, for a specific indication manner, refer to the foregoing similar descriptions. It is assumed that a total quantity of bits included in all pieces of indication information corresponding to one piece of neighboring cell information is less than a quantity of services that need to be indicated. In this case, for a specific indication manner, refer to the foregoing similar descriptions.

In a fourth indication manner of the indication information, each of the K pieces of indication information may be used to indicate whether a neighboring frequency supports one or more services. The neighboring frequency may also be referred to as an adjacent frequency, and is a frequency of a cell neighboring to the first cell.

Currently, the network device sends neighboring frequency information by using a system message. In this case, the K pieces of indication information may be added to the neighboring frequency information. The K pieces of indication information correspond to M pieces of neighboring frequency information in the neighboring frequency information, the K pieces of indication information are used to indicate whether each of the M pieces of neighboring frequency information supports a corresponding service, and one of the M pieces of neighboring frequency information may correspond to one or more pieces of indication information. M is less than or equal to a quantity of neighboring frequencies included in the neighboring frequency information sent by the network device.

For a specific indication manner of the indication information, refer to the foregoing descriptions when the first information is the neighboring cell information. The indication manner is similar, and only the foregoing "neighboring cell information" needs to be replaced with the "neighboring frequency information".

The first message may be a system message, for example, a system information block (system information block SIB) and/or a master information block (master information block, MIB). This is not specifically limited.

For example, the first message is a MIB. In this case, a bit in cellbarred included in the MIB may be used for the K pieces of indication information. This is equivalent to that a meaning indicated by cellbarred changes, and cellbarred is used for the K pieces of indication information to indicate whether each of the M pieces of first information supports a corresponding service. All of the K pieces of indication information may be implemented by using the bit included in cellbarred, or some of the K pieces of indication information may be implemented by using the bit included in cellbarred, and the other of the K pieces of indication information further need to be implemented in another manner, for example, may be implemented by using another bit in the MIB, or may be carried in a SIB. If the other of the K pieces of indication information are carried in the SIB, the first message includes the SIB and the MIB. For example, the K pieces of indication information included in the first message are used to indicate whether the first cell supports one or more services, and the K pieces of indication information may be implemented by using cellbarred included in the MIB, to indicate whether the first cell supports one or more services. For a specific indication manner, refer to the foregoing similar descriptions.

Alternatively, a spare (spare) bit in the MIB may be used for the K pieces of indication information. For example, currently, the spare bit in the MIB is one bit, and the one bit is a last bit in the MIB. In this case, the one bit may be used for the K pieces of indication information. All of the K pieces of indication information may be implemented by using the spare bit in the MIB, or some of the K pieces of indication information may be implemented by using the spare bit in the MIB, and the other of the K pieces of indication information further need to be implemented in another manner, for example, may be implemented by using another bit in the MIB (for example, implemented by using cellbarred), or may be carried in a SIB. If the other of the K pieces of indication information are carried in the MIB, the first message includes the SIB and the MIB. For example, the K pieces of indication information included in the first message are used to indicate whether the first cell supports one or more services, and the K pieces of indication information may be implemented by using a spare bit in the MIB. For example, the spare bit is one bit. For example, if a value of the one bit is "1", it indicates that the first cell supports the V2X service, or if a value of the one bit is "0", it indicates that the first cell supports the URLLC service, the eMBB service, and the mMTC service. Alternatively, if a value of the one bit is "1", it indicates that the first cell supports the URLLC service, the eMBB service, the V2X service, and the mMTC service, or if a value of the one bit is "0", it indicates that the first cell does not support the URLLC service, the eMBB service, the V2X service, and the mMTC service. A specific indication manner is not limited.

In addition, in the foregoing descriptions, one piece of indication information (or one or more bits) is used to explicitly indicate whether one cell or one frequency supports one service. For example, one bit in the one piece of indication information may be used to indicate whether the first information supports the URLLC service in the following manner: If a value of the one bit is "1", it indicates that the first information supports the URLLC service, or if a value of the one bit is "0", it indicates that the first cell does not support the URLLC service. In addition to being indicated explicitly, a V2X service or a service for which a dedicated resource is configured may be further indicated implicitly. For example, one or more bits included in one piece of indication information may still be used to indicate whether one cell or one frequency supports the V2X service. For example, one bit in the one piece of indication information may be used to indicate whether the first information supports the V2X service in the following manner: If a value of the one bit is "1", it indicates that a V2X resource is configured for the first information, that is, it indicates that a V2X resource is configured for the first information; or if a value of the one bit is "0", it indicates that no V2X resource is configured for the first information, that is, it indicates that no V2X resource is configured for the first information. If the indication information indicates that a V2X resource is configured for the first information, it may be considered that, that the first information supports the V2X service is implicitly indicated, or if the indication information indicates that no V2X resource is configured for the first information, it may be considered that, that the first information does not support the V2X service is implicitly indicated. In this implicit indication manner, whether a V2X resource is configured for the first information can be indicated, and whether the first information supports the V2X service can also be indicated, so that the terminal device can obtain more information. Whether the network device explicitly or implicitly indicates, by using the indication information, whether the first information supports the V2X service may be configured by the network device and notified to the terminal device, or may be specified in a protocol. This is not specifically limited. The explicit indication manner is used as an example in the foregoing descriptions. If the implicit indication manner needs to be used, the foregoing description used to indicate whether the first information supports the V2X service may be directly replaced with the implicit indication manner described herein. This is also similar in the following descriptions.

S32: The network device sends the first message, and the terminal device receives the first message from the network device.

For example, the network device sends the first message in the first cell, and the terminal device receives the first message in the first cell. If the first message is a system message, the network device may broadcast the first message.

S33: The terminal device determines, based on the K pieces of indication information included in the first message, whether each of the M pieces of first information supports a corresponding service, where each of the K pieces of indication information corresponds to one or more services, and is used to indicate whether one of the M pieces of first information supports the one or more services, the first information is cell information or frequency information, M is a positive integer, and K is an integer greater than or equal to M.

After receiving the first message, the terminal device may determine, based on the K pieces of indication information, whether each of the M pieces of first information supports a corresponding service. A specific determining manner is related to the foregoing specific indication manner of the indication information. Simply, content indicated by the indication information is content that can be determined by the terminal device. Therefore, for details, refer to the foregoing related descriptions.

In an optional manner, it may be considered that the technical solution provided in this embodiment of this application is applied only to a terminal device of a new version. A terminal device of an earlier version possibly cannot identify the indication information provided in this embodiment of this application, and therefore possibly cannot determine, according to the solution in this embodiment of this application, whether a corresponding cell or frequency supports a corresponding service. In this case, if the terminal device of the earlier version moves to an overlapping coverage area of a 5G network and a 4G network, that is, an overlapping coverage area of an SA network deployment mode and an NSA network deployment mode, the terminal device preferentially accesses the 5G network deployed in the SA network deployment mode. However, when operators deploy a 5G network in an SA network deployment mode, some network devices in the 5G network may provide only a specific service, for example, provide only a URLLC service. If the network device rejects camping of the terminal device in the prior-art manner, camping of all terminal devices is rejected. However, the network device needs to provide services for some terminal devices. Therefore, the network device cannot select to reject camping of the terminal device. If a terminal device that camps on the network device requires another service, for example, requires an eMBB service, the network device cannot provide the service. Consequently, the terminal device cannot work normally. Therefore, the network device may further send a system message in the first cell, for example, a SIB 1. A cellreservedforotheruse field in the SIB 1 is used to indicate that camping of the terminal device is rejected.

After the terminal device receives the SIB 1 from the network device, if the terminal device is a terminal device of an earlier version, the terminal device may determine, based on the cellreservedforotheruse field, that camping on the first cell is rejected. Therefore, the terminal device may not camp on the first cell, but may reselect to camp on another cell. In this case, regardless of whether the first cell can provide a service required by the terminal device of the earlier version, camping of the terminal device of the earlier version is rejected. Even if the first cell can provide the service required by the terminal device of the earlier version, camping on the first cell is rejected, and the terminal device may continue to select another cell, so that the terminal device can normally work in the another cell. However, in this embodiment of this application, a probability that the terminal device camps on a cell that cannot provide a service required by the terminal device can be reduced as much as possible.

Alternatively, after the terminal device receives the SIB1 from the network device, if the terminal device is a terminal device of a new version, the terminal device does not determine, based on the cellreservedforotheruse field, whether to camp on the first cell. In other words, the terminal device of the new version does not consider the cellreservedforotheruse field, but determines, based on the K pieces of first information provided in this embodiment of this application, whether the first cell supports a service required by the terminal device, to determine whether to camp on the first cell.

In an optional implementation, the network device may further send a second message in addition to the first message, and the second message may include time information corresponding to the M pieces of first information. For example, the first message and the second message may be a same message, or may be different messages. If the first message and the second message are different messages, the network device may send the first message before the second message, or may send the second message before the first message, or may send the first message and the second message at the same time.

For example, the time information included in the second message may be in a one-to-one correspondence with the indication information. In other words, the second message may include K pieces of time information, and each of the K pieces of time information is used to indicate that first information corresponding to one piece of corresponding indication information supports one or more services corresponding to the indication information in a time period, or each of the K pieces of time information is used to indicate that first information corresponding to one piece of corresponding indication information does not support one or more services corresponding to the indication information in a time period. For example, one of the K pieces of time information is first time information, the first time information is information about a time period, the first time information corresponds to first indication information in the K pieces of indication information, and the first indication information is used to indicate whether the first cell supports a URLLC service and a V2X service. In this case, the first time information is used to indicate that the first cell supports the URLLC service and the V2X service in the time period corresponding to the first time information, or used to indicate that the first cell does not support the URLLC service and the V2X service in the time period corresponding to the first time information.

Alternatively, each piece of time information in the time information included in the second message may correspond to one service. Because the K pieces of indication information are used to indicate whether each of the M pieces of first information supports a corresponding service, there is a correspondence among the service, the first information, and the indication information. One service corresponds to one piece of first information, and one service corresponds to one piece of indication information (one piece of indication information may be used to indicate one or more services). In this case, one piece of time information may be used to indicate that corresponding first information supports a service corresponding to the time information in a time period, or used to indicate that corresponding first information does not support a service corresponding to the time information in a time period. For example, one of the K pieces of time information is first time information, the first time information is information about a time period, the first time information corresponds to a URLLC service, and first indication information in the K pieces of indication information is used to indicate whether the first cell supports the URLLC service and a V2X service. In this case, the first time information is used to indicate that the first cell supports the URLLC service in the time period corresponding to the first time information, or used to indicate that the first cell does not support the URLLC service in the time period corresponding to the first time information.

In some cases, a cell or a frequency may support a service in a period of time, but does not support the service in another period of time. For example, a cell originally supports a URLLC service and an eMBB service, but the cell may have a relatively high requirement for the URLLC service in a period of time. In this case, the cell may stop supporting the eMBB service and supports only the URLLC service in this period of time. However, after this period of time, the cell may resume supporting the eMBB service. Therefore, in this embodiment of this application, in consideration of this feature of the cell or the frequency, time information is added to corresponding indication information or a corresponding service, so that a time limit is added for a cell or a frequency about whether a corresponding service is supported. The cell or the frequency supports the corresponding service within the time limit, and the cell or the frequency does not support the corresponding service beyond the time limit. Alternatively, the cell or the frequency does not support the corresponding service within the time limit, and the cell or the frequency supports the corresponding service beyond the time limit. Therefore, indication about whether a cell supports some services is more practical.

If the terminal device determines, based on the K pieces of indication information, that the first cell supports a service required by the terminal device (or determines that the first cell supports a service required by the terminal device in a time period, and a current moment has been within the time period, or determines that the first cell does not support a service required by the terminal device in a time period, and a current moment is beyond the time period), and the terminal device has camped on the first cell, the terminal device may continue to camp on the first cell.

Alternatively, if the terminal device determines, based on the K pieces of indication information, that the first cell does not support a first service required by the terminal device (or determines that the first cell does not support a service required by the terminal device in a time period, and a current moment has been within the time period, or determines that the first cell supports a service required by the terminal device in a time period, and a current moment is beyond the time period), and the terminal device has accessed the first cell, the terminal device may reselect to camp on another cell through cell reselection, cell handover, or the like, to normally perform the first service.

Alternatively, if the terminal device determines, based on the K pieces of indication information, that the first cell supports some services required by the terminal device (or determines that the first cell supports some services required by the terminal device in a time period, and a current moment has been within the time period, or determines that the first cell does not support some services required by the terminal device in a time period, and a current moment is beyond the time period), and the terminal device has camped on the first cell, the terminal device may continue to camp on the first cell, and may initiate a service supported by the first cell in the first cell. Subsequently, when the terminal device needs to initiate a service that is not supported by the first cell, the terminal device may directly initiate a process such as cell reselection or cell handover, to hand over to or reselect another cell that can support the service that is not supported by the first cell. Alternatively, when the terminal device needs to initiate a service that is not supported by the first cell, the terminal device may re-determine whether the first cell supports the service (for example, the network device may periodically send the first message, and the terminal device may receive the first message for a plurality of times, and therefore may determine, based on the K pieces of indication information included in the newly received first message, whether the first cell supports the service). If the terminal device determines that the first cell can support the service, the terminal device may continue to camp on the first cell. Alternatively, if the terminal device determines that the first cell still does not support the service, the terminal device may directly initiate a process such as cell reselection or cell handover, to hand over to or reselect another cell that can support the service.

For example, services required by the terminal device include a URLLC service and an eMBB service. If the terminal device determines, based on the K pieces of indication information, that the first cell supports the eMBB service but does not support the URLLC service, and the terminal device has camped on the first cell, the terminal device may continue to camp on the first cell, and may initiate the eMBB service in the first cell. Subsequently, when the terminal device needs to initiate the URLLC service, the terminal device may directly initiate a process such as cell reselection or cell handover, to hand over to or reselect another cell that can support the URLLC service. Alternatively, when the terminal device needs to initiate the URLLC service, the terminal device may re-determine whether the first cell supports the URLLC service (for example, the network device may periodically send the first message, and the terminal device may receive the first message for a plurality of times, and therefore may determine, based on the K pieces of indication information included in the newly received first message, whether the first cell supports the URLLC service). If the terminal device determines that the first cell supports the URLLC service, the terminal device may continue to camp on the first cell. Alternatively, if the terminal device determines that the first cell still does not support the URLLC service, the terminal device may directly initiate a process such as cell reselection or cell handover, to hand over to or reselect another cell that can support the URLLC service.

Alternatively, if the terminal device determines, based on the K pieces of indication information, that the first cell does not support a first service required by the terminal device (or determines that the first cell does not support a service required by the terminal device in a time period, and a current moment has been within the time period, or determines that the first cell supports a service required by the terminal device in a time period, and a current moment is beyond the time period), and the terminal device has camped on the first cell, the terminal device may continue to camp on the first cell. For example, the terminal device may not need to perform the first service currently, and therefore may continue to camp on the first cell. Subsequently, when the terminal device needs to initiate the first service, the terminal device may directly initiate a process such as cell reselection or cell handover, to hand over to or reselect another cell that can support the first service. Alternatively, when the terminal device needs to initiate the first service, the terminal device may re-determine whether the first cell supports the first service (for example, the network device may periodically send the first message, and the terminal device may receive the first message for a plurality of times, and therefore may determine, based on the K pieces of indication information included in the newly received first message, whether the first cell supports the first service). If the terminal device determines that the first cell supports the first service, the terminal device may continue to camp on the first cell. Alternatively, if the terminal device determines that the first cell still does not support the first service, the terminal device may directly initiate a process such as cell reselection or cell handover, to hand over to or reselect another cell that can support the first service.

Alternatively, when performing cell handover, the terminal device may determine, based on the K pieces of indication information, whether a second cell supports a first service required by the terminal device. If the terminal device determines that the second cell supports the first service (or determines that the second cell supports a service required by the terminal device in a time period, and a current moment has been within the time period, or determines that the second cell does not support a service required by the terminal device in a time period, and a current moment is beyond the time period), the terminal device may hand over to the second cell. Alternatively, if the terminal device determines that the second cell does not support the first service (or determines that the second cell does not support a service required by the terminal device in a time period, and a current moment has been within the time period, or determines that the second cell supports a service required by the terminal device in a time period, and a current moment is beyond the time period), the terminal device may not hand over to the second cell, or the terminal device may set a priority of the second cell to a low priority. The priority of the second cell is used as a sequence of selecting the second cell by the terminal device during cell reselection or handover. If the terminal device sets the priority of the second cell to a low priority, the terminal device preferentially selects a cell with a high priority, and a probability of selecting the second cell is relatively low, so as to ensure, as much as possible, that the terminal device can camp on a cell that can provide the first service. The second cell may be a cell to which the terminal device hands over, and may also be referred to as a target cell.

Alternatively, when performing cell reselection, the terminal device may determine, based on the K pieces of indication information, whether a second cell supports a first service required by the terminal device. If the terminal device determines that the second cell supports the first service (or determines that the second cell supports a service required by the terminal device in a time period, and a current moment has been within the time period, or determines that the second cell does not support a service required by the terminal device in a time period, and a current moment is beyond the time period), the terminal device may reselect the second cell. Alternatively, if the terminal device determines that the second cell does not support the first service (or determines that the second cell does not support a service required by the terminal device in a time period, and a current moment has been within the time period, or determines that the second cell supports a service required by the terminal device in a time period, and a current moment is beyond the time period), the terminal device may not reselect the second cell, or the terminal device may set a priority of the second cell to a low priority. The priority of the second cell is used as a sequence of selecting the second cell by the terminal device during cell reselection or handover. If the terminal device sets the priority of the second cell to a low priority, the terminal device preferentially selects a cell with a high priority during cell reselection, and a probability of selecting the second cell is relatively low, so as to ensure, as much as possible, that the terminal device can camp on a cell that can provide the first service. In this case, the second cell may be a cell accessed by the terminal device after the terminal device performs cell reselection.

Alternatively, when the terminal device performs cell reselection or cell handover, if the terminal device determines that a second cell supports a first service (or determines that a second cell supports a service required by the terminal device in a time period, and a current moment has been within the time period, or determines that a second cell does not support a service required by the terminal device in a time period, and a current moment is beyond the time period), the terminal device may reselect or hand over to the second cell, and may initiate a service supported by the second cell in the second cell. Subsequently, when the terminal device needs to initiate a service that is not supported by the second cell, the terminal device may directly initiate a process such as cell reselection or cell handover, to hand over to or reselect another cell that can support the service that is not supported by the second cell. Alternatively, when the terminal device needs to initiate a service that is not supported by the second cell, the terminal device may re-determine whether the second cell supports the service (for example, the network device may periodically send the first message, and the terminal device may receive the first message for a plurality of times, and therefore may determine, based on the K pieces of indication information included in the newly received first message, whether the second cell supports the service). If the terminal device determines that the first cell can support the service, the terminal device may continue to camp on the second cell. Alternatively, if the terminal device determines that the second cell still does not support the service, the terminal device may directly initiate a process such as cell reselection or cell handover, to hand over to or reselect another cell that can support the service.

For example, services required by the terminal device include a URLLC service and an eMBB service. When the terminal device performs cell reselection or cell handover, if the terminal device determines that the second cell supports the eMBB service but does not support the URLLC service, the terminal device may reselect or hand over to the second cell, and may initiate the eMBB service in the second cell. Subsequently, when the terminal device needs to initiate the URLLC service, the terminal device may directly initiate a process such as cell reselection or cell handover, to hand over to or reselect another cell that can support the URLLC service. Alternatively, when the terminal device needs to initiate the URLLC service, the terminal device may re-determine whether the second cell supports the URLLC service (for example, the network device may periodically send the first message, and the terminal device may receive the first message for a plurality of times, and therefore may determine, based on the K pieces of indication information included in the newly received first message, whether the second cell supports the URLLC service). If the terminal device determines that the second cell supports the URLLC service, the terminal device may continue to camp on the second cell. Alternatively, if the terminal device determines that the second cell still does not support the URLLC service, the terminal device may directly initiate a process such as cell reselection or cell handover, to hand over to or reselect another cell that can support the URLLC service.

Alternatively, when the terminal device performs cell reselection or cell handover, if the terminal device determines that a second cell does not support a first service (or determines that a second cell does not support a service required by the terminal device in a time period, and a current moment has been within the time period, or determines that a second cell supports a service required by the terminal device in a time period, and a current moment is beyond the time period), and the terminal device may still reselect or hand over to the second cell, for example, the terminal device may not need to perform the first service currently, the terminal device may reselect or hand over to the second cell. Subsequently, when the terminal device needs to initiate the first service, the terminal device may directly initiate a process such as cell reselection or cell handover, to hand over to or reselect another cell that can support the first service. Alternatively, when the terminal device needs to initiate the first service, the terminal device may re-determine whether the second cell supports the first service (the network device may periodically send the first message, and the terminal device may receive the first message for a plurality of times, and therefore may determine, based on the K pieces of indication information included in the newly received first message, whether the second cell supports the first service). If the terminal device determines that the second cell supports the first service, the terminal device may continue to camp on the second cell. Alternatively, if the terminal device determines that the second cell still does not support the first service, the terminal device may directly initiate a process such as cell reselection or cell handover, to hand over to or reselect another cell that can support the first service.

Alternatively, when performing cell reselection or cell handover, the terminal device may first perform cell reselection or cell handover according to a normal procedure without considering whether a second cell supports a service required by the terminal device. After the terminal device reselects or hands over to the second cell, if the terminal device needs to perform a corresponding service, for example, the terminal device needs to perform a first service, the terminal device determines whether the second cell supports the first service. If the terminal device determines that the second cell supports the first service (or determines that the second cell supports the service required by the terminal device in a time period, and a current moment has been within the time period, or determines that the second cell does not support the service required by the terminal device in a time period, and a current moment is beyond the time period), the terminal device may continue to camp on the second cell, and may initiate the first service in the second cell. Alternatively, if the second cell does not support the first service, the terminal device may initiate a process such as cell reselection or cell handover, to hand over to or reselect another cell that can support the first service.

In other words, when performing cell handover or cell reselection, the terminal device may determine whether the second cell supports the service required by the terminal device, so as to avoid, as much as possible in the beginning, accessing a cell that does not support the service required by the terminal device, thereby reducing a quantity of times that the terminal device performs reselection or handover. Alternatively, when the terminal device needs to perform a corresponding service, the terminal device may determine whether a cell on which the terminal device camps supports the service required by the terminal device. Even if the cell does not support the service required by the terminal device, the cell possibly can provide another service for the terminal device, and the terminal device may still complete corresponding work in the cell, so as to reduce complexity of performing cell handover or cell reselection by the terminal device.

The first service may include at least one of a URLLC service, an eMBB service, an mMTC service, or a V2X service, or may include at least one of the four services, and a service other than the four services. For example, the first service may be a URLLC service, an eMBB service, an mMTC service, or a V2X service, or may be a service other than the four services. Alternatively, the first service may include a URLLC service and an eMBB service, or a URLLC service and an mMTC service, or an eMBB service and an mMTC service, or a URLLC service, an eMBB service, and an mMTC service, or a URLLC service and a V2X service, or an eMBB service and a V2X service, or an mMTC service and a V2X service, or a URLLC service, an eMBB service, and a V2X service, or a URLLC service, an mMTC service, and a V2X service, or an mMTC service, an eMBB service, and a V2X service, or a URLLC service, an eMBB service, a V2X service, and an mMTC service, or may include at least one of the four services, and a service other than the four services, for example, include a URLLC service and a V2X service, and a service other than the four services.

In this embodiment of this application, the first message may include the K pieces of indication information, and each piece of indication information may be used to indicate whether one cell or one frequency supports one or more services. After receiving the first message, the terminal device may determine whether a corresponding cell or frequency supports a corresponding service. Therefore, the terminal device may select not to camp on the cell or the frequency. Alternatively, if the terminal device has camped on the cell or the frequency, the terminal device may access another cell or frequency through cell reselection or the like. In this way, the terminal device may select to access a cell or a frequency that can provide a service required by the terminal device, so that the terminal device can work normally. For the network device, because the provided service can be used by the terminal device, resource utilization is also improved.

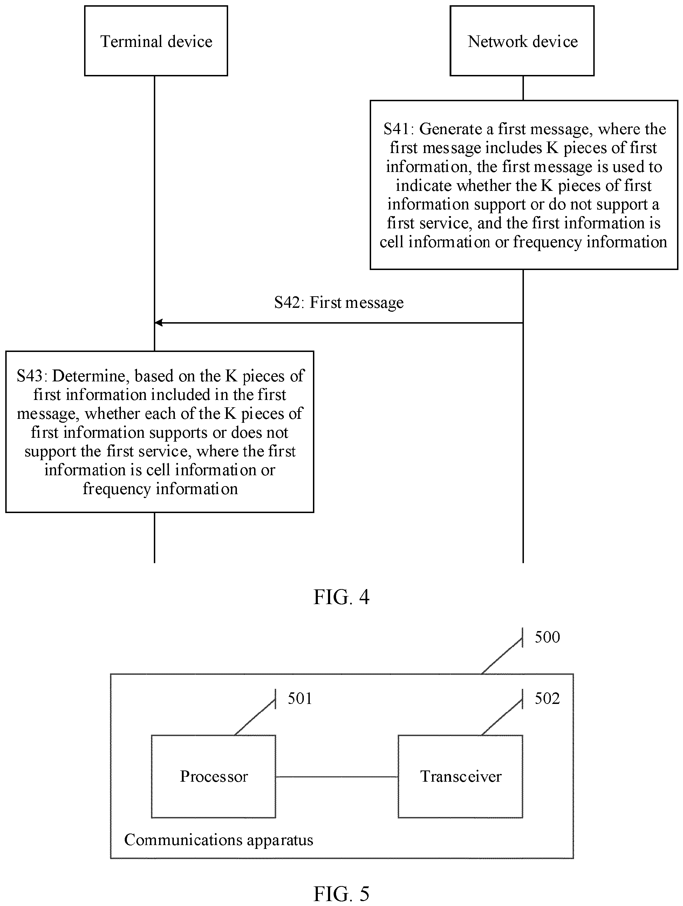

To resolve a same technical problem, an embodiment of this application provides a second message sending and receiving method. FIG. 4 is a flowchart of the method. In the following description process, an example in which the method is applied to the network architecture shown in FIG. 2 is used. In addition, the method may be performed by two communications apparatuses. The two communications apparatuses are, for example, a third communications apparatus and a fourth communications apparatus. The third communications apparatus may be a network device or a communications apparatus that can support a network device in implementing a function required for the method, or the third communications apparatus may be a terminal device or a communications apparatus that can support a terminal device in implementing a function required for the method. Certainly, the third communications apparatus may alternatively be another communications apparatus, for example, a chip system. Similarly, the fourth communications apparatus may be a network device or a communications apparatus that can support a network device in implementing a function required for the method, or the fourth communications apparatus may be a terminal device or a communications apparatus that can support a terminal device in implementing a function required for the method. Certainly, the fourth communications apparatus may alternatively be another communications apparatus, for example, a chip system. In addition, implementations of the third communications apparatus and the fourth communications apparatus are not limited. For example, the third communications apparatus may be a network device, and the fourth communications apparatus is a terminal device; or both the third communications apparatus and the fourth communications apparatus are network devices; or both the third communications apparatus and the fourth communications apparatus are terminal devices; or the third communications apparatus is a network device, and the fourth communications apparatus is a communications apparatus that can support a terminal device in implementing a function required for the method. The network device is, for example, a base station.

For ease of description, the following uses an example in which the method is performed by a network device and a terminal device, that is, an example in which the third communications apparatus is the network device and the fourth communications apparatus is the terminal device. If this embodiment is applied to the network architecture shown in FIG. 2, the following network device configured to perform the embodiment shown in FIG. 3 may be the network device in the network architecture shown in FIG. 2, and the following terminal device may be the terminal device in the network architecture shown in FIG. 2.

S41: The network device generates a first message, where the first message includes K pieces of first information, the first message is used to indicate that the K pieces of first information support or do not support a first service, the first information is cell information or frequency information, and K is a positive integer.

The first service includes at least one of a URLLC service, an eMBB service, an mMTC service, or a V2X service or may include at least one of the four services, and a service other than the four services.. Alternatively, the first service may include a URLLC service and an eMBB service, or a URLLC service and an mMTC service, or an eMBB service and an mMTC service, or a URLLC service, an eMBB service, and an mMTC service, or a URLLC service and a V2X service, or an eMBB service and a V2X service, or an mMTC service and a V2X service, or a URLLC service, an eMBB service, and a V2X service, or a URLLC service, an mMTC service, and a V2X service, or an mMTC service, an eMBB service, and a V2X service, or a URLLC service, an eMBB service, a V2X service, and an mMTC service, or may not include the four services, or may include at least one of the four services, and a service other than the four services, for example, include a URLLC service and a V2X service, and a service other than the four services.

For example, the first message includes a list, the list includes K pieces of first information, and the K pieces of first information are, for example, K pieces of cell information such as K cell IDs, or the K pieces of first information are, for example, K pieces of frequency information. All the first information in the list indicates that the first service is supported or not supported. Whether the K pieces of first information included in the first message indicate that the first service is supported or not supported may be notified by the network device to the terminal device in advance, or may be specified in a protocol. This manner is relatively simple: Only first information that supports the first service (or does not support the first service) needs to be added to the first message for sending, and indication information does not need to be added to the corresponding first information, so that the first message has a relatively simple structure and is easy to implement.

For example, the first message is a system message such as a SIB or a MIB, or may be another message such as UE specific (UE specific) signaling. For example, the network device usually broadcasts neighboring cell information or neighboring frequency information by using a system message. In this case, in addition to broadcasting the neighboring cell information by using the system message, the network device may further broadcast the first message. The K pieces of first information included in the first message may belong to the neighboring cell information included in the network device. Alternatively, in addition to broadcasting the neighboring frequency information by using the system message, the network device may further broadcast the first message. The K pieces of first information included in the first message may belong to the neighboring frequency information included in the network device. Alternatively, even if the network device does not broadcast the neighboring cell information, the network device may broadcast the first message including the K pieces of cell information. Alternatively, even if the network device does not broadcast the neighboring frequency information, the network device may broadcast the first message including the K pieces of frequency information.

S42: The network device sends the first message, and the terminal device receives the first message from the network device.

For example, the network device may send the first message in a first cell. The first cell may be a serving cell of the terminal device, the neighboring cell information in S41 is neighboring cell information of the first cell, and the neighboring frequency information in S41 is neighboring frequency information of a frequency of the first cell.

S43: The terminal device determines, based on the K pieces of first information included in the first message, that each of the K pieces of first information supports or does not support the first service, where the first information is cell information or frequency information, and K is a positive integer.

After the terminal device receives the first message, if the first message is used to indicate that the K pieces of first information support the first service, the terminal device may determine that each of the K pieces of first information supports the first service; or if the first message is used to indicate that the K pieces of first information do not support the first service, the terminal device may determine that each of the K pieces of first information does not support the first service.

When performing cell handover, the terminal device may determine, based on the first message, whether a second cell supports the first service, for example, whether the second cell is a cell corresponding to one of the K pieces of first information. If the terminal device determines that the second cell supports the first service, the terminal device may hand over to the second cell. Alternatively, if the terminal device determines that the second cell does not support the first service, the terminal device may not hand over to the second cell, or the terminal device may set a priority of the second cell to a low priority. The priority of the second cell is used as a sequence of selecting the second cell by the terminal device during cell reselection or handover. If the terminal device sets the priority of the second cell to a low priority, the terminal device preferentially selects a cell with a high priority, and a probability of selecting the second cell is relatively low, so as to ensure, as much as possible, that the terminal device can camp on a cell that can provide the first service. The second cell may be a cell to which the terminal device hands over, and may also be referred to as a target cell.

Alternatively, when performing cell reselection, the terminal device may determine, based on the first message, whether a second cell supports the first service required by the terminal device, for example, whether the second cell is a cell corresponding to one of the K pieces of first information. If the terminal device determines that the second cell supports the first service, the terminal device may reselect the second cell. Alternatively, if the terminal device determines that the second cell does not support the first service, the terminal device may not reselect the second cell, or the terminal device may set a priority of the second cell to a low priority. The priority of the second cell is used as a sequence of selecting the second cell by the terminal device during cell reselection or handover. If the terminal device sets the priority of the second cell to a low priority, the terminal device preferentially selects a cell with high priority during cell reselection, and a probability of selecting the second cell is relatively low, so as to ensure, as much as possible, that the terminal device can camp on a cell that can provide the first service. In this case, the second cell may be a cell accessed by the terminal device after the terminal device performs cell reselection. According to the technical solution provided in this embodiment of this application, the terminal device can determine whether a corresponding neighboring cell or neighboring frequency supports a service required by the terminal device, so that when performing cell handover or cell reselection, the terminal device can access, as much as possible, a cell that can support the service required by the terminal device, to work normally in the cell. In addition, in this embodiment of this application, whether a plurality of pieces of first information support the first service can be indicated by using only the first message. This manner is relatively simple.

The following describes, with reference to the accompanying drawings, apparatuses configured to implement the foregoing methods in the embodiments of this application. Therefore, all the foregoing content may be used in subsequent embodiments, and repeated content is not described.

An embodiment of this application provides a first communications apparatus, and the communications apparatus is, for example, a first communications apparatus. Referring to FIG. 5, the communications apparatus is, for example, a communications apparatus 500. The communications apparatus 500 may implement functions of the network device described above. The communications apparatus 500 may be the network device described above, or may be a chip disposed in the network device described above. The communications device 500 may include a processor 501 and a transceiver 502. The processor 501 may be configured to perform S31 in the embodiment shown in FIG. 3 and/or another process used to support the technology described in this specification. The transceiver 502 may be configured to perform S32 in the embodiment shown in FIG. 3 and/or another process used to support the technology described in this specification.

For example, the processor 501 is configured to generate a first message, where the first message includes K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M.

The transceiver 502 is configured to send the first message in a first cell.

The one or more services include at least one of the following: a URLLC service, an eMBB service, and an mMTC service.

In a possible implementation, each of the K pieces of indication information is used to indicate whether one neighboring cell or one neighboring frequency supports one or more services.

In a possible implementation, K = 1, and the indication information is used to indicate whether the first cell supports one or more services.

In a possible implementation,
one of the K pieces of indication information includes N bits, where the N bits are used to indicate whether the first cell supports N services, each bit is used to indicate one service, and N is a positive integer; or
one of the K pieces of indication information includes H bits, where the H bits are used to indicate whether the first cell supports N services, each bit is used to indicate one or more services, H is a positive integer, N is an integer greater than or equal to 2, and H is less than N.

In a possible implementation, the transceiver 502 is further configured to send a second message in the first cell, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

In a possible implementation, the transceiver 502 is further configured to send a SIB 1 message in the first cell, where a cell reserved for other use field in the SIB1 is used to indicate that camping of a terminal device is rejected.

In a possible implementation, the first message is a SIB and/or a MIB.

In a possible implementation, the first message is a MIB, and a bit in cellbarred in the MIB is used for the K pieces of indication information, or a last bit in the MIB is used for the K pieces of indication information.

All related content of the steps in the foregoing method embodiments may be cited in function descriptions of corresponding function modules, and details are not described herein again.

An embodiment of this application provides a second communications apparatus, and the communications apparatus is, for example, a second communications apparatus. The communications apparatus may implement functions of the terminal device described above. The communications apparatus may be the terminal device described above, or may be a chip disposed in the terminal device described above. The communications apparatus may include a processor and a transceiver. The processor may be configured to perform S33 in the embodiment shown in FIG. 3 and/or another process used to support the technology described in this specification. The transceiver may be configured to perform S32 in the embodiment shown in FIG. 3 and/or another process used to support the technology described in this specification. For an accompanying drawing of the communications apparatus, still refer to FIG. 5. To be specific, the processor may be the processor 501, and the transceiver may be the transceiver 502. The two communications apparatuses share one accompanying drawing. It does not mean that the two communications apparatuses are a same communications apparatus, but means that included component types are similar. Therefore, the two communications apparatuses are represented by using one accompanying drawing.

For example, the transceiver 502 is configured to receive a first message from a network device.

The processor 501 is configured to determine, based on K pieces of indication information included in the first message, whether each of the M pieces of first information supports a corresponding service, where each of the K pieces of indication information corresponds to one or more services, and is used to indicate whether one of the M pieces of first information supports the one or more services, the first information is cell information or frequency information, M is a positive integer, and K is an integer greater than or equal to M.

In a possible implementation, the one or more services include at least one of the following: a URLLC service, an eMBB service, and an mMTC service.

In a possible implementation, each of the K pieces of indication information is used to indicate whether one neighboring cell or one neighboring frequency supports one or more services.

In a possible implementation, K = 1, and the indication information is used to indicate whether a current cell supports one or more services.

In a possible implementation, the transceiver 502 is further configured to receive a second message from the network device, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

In a possible implementation,
one of the K pieces of indication information includes N bits, where the N bits are used to indicate whether the current cell supports N services, each bit is used to indicate one service, and N is a positive integer; or
one of the K pieces of indication information includes H bits, where the H bits are used to indicate whether the current cell supports N services, each bit is used to indicate one or more services, H is a positive integer, N is an integer greater than or equal to 2, and H is less than N.

In a possible implementation, the transceiver 502 is further configured to receive a SIB 1 message from the network device, where a cellreservedforotheruse field in the SIB1 is used to indicate that camping of a terminal device is rejected.

In a possible implementation, the first message is a SIB and/or a MIB.

In a possible implementation, the first message is a MIB, and a bit in cellbarred in the MIB is used for the K pieces of indication information, or a last bit in the MIB is used for the K pieces of indication information.

In a possible implementation, the terminal device supports a first service in the one or more services, and the processor 501 is further configured to: when performing cell reselection or cell handover, determine, based on the K pieces of first information, whether a second cell supports the first service.

In a possible implementation, the processor 501 is further configured to:
when the second cell does not support the first service, determine not to reselect or hand over to the second cell; or
when the second cell does not support the first service, set a priority of the second cell to a low priority, where the priority of the second cell is used as a sequence of selecting the second cell by the terminal device during cell reselection or handover.

All related content of the steps in the foregoing method embodiments may be cited in function descriptions of corresponding function modules, and details are not described herein again.

An embodiment of this application provides a third communications apparatus, and the communications apparatus is, for example, a third communications apparatus. The communications apparatus may implement functions of the network device described above. The communications apparatus may be the network device described above, or may be a chip disposed in the network device described above. The communications apparatus may include a processor and a transceiver. The processor may be configured to perform S41 in the embodiment shown in FIG. 4 and/or another process used to support the technology described in this specification. The transceiver may be configured to perform S42 in the embodiment shown in FIG. 4 and/or another process used to support the technology described in this specification. For an accompanying drawing of the communications apparatus, still refer to FIG. 5. To be specific, the processor may be the processor 501, and the transceiver may be the transceiver 502. The two communications apparatuses share one accompanying drawing. It does not mean that the two communications apparatuses are a same communications apparatus, but means that included component types are similar. Therefore, the two communications apparatuses are represented by using one accompanying drawing.

For example, the processor 501 is configured to generate a first message, where the first message includes K pieces of first information, the first message is used to indicate that the K pieces of first information support or do not support a first service, the first information is cell information or frequency information, and K is a positive integer.

The transceiver 502 is configured to send the first message.

All related content of the steps in the foregoing method embodiments may be cited in function descriptions of corresponding function modules, and details are not described herein again.

An embodiment of this application provides a fourth communications apparatus, and the communications apparatus is, for example, a fourth communications apparatus. The communications apparatus may implement functions of the terminal device described above. The communications apparatus may be the terminal device described above, or may be a chip disposed in the terminal device described above. The communications apparatus may include a processor and a transceiver. The processor may be configured to perform S43 in the embodiment shown in FIG. 4 and/or another process used to support the technology described in this specification. The transceiver may be configured to perform S42 in the embodiment shown in FIG. 4 and/or another process used to support the technology described in this specification. For an accompanying drawing of the communications apparatus, still refer to FIG. 5. To be specific, the processor may be the processor 501, and the transceiver may be the transceiver 502. The two communications apparatuses share one accompanying drawing. It does not mean that the two communications apparatuses are a same communications apparatus, but means that included component types are similar. Therefore, the two communications apparatuses are represented by using one accompanying drawing.

For example, the transceiver 502 is configured to receive a first message from a network device.

The processor 501 is configured to determine, based on K pieces of first information included in the first message, whether each of the K pieces of first information supports or does not support a first service, where the first information is cell information or frequency information, and K is a positive integer.

In a possible implementation, a terminal device supports the first service, and the processor 501 is further configured to: when performing cell reselection or cell handover, determine, based on the K pieces of first information, whether a first cell supports the first service.

In a possible implementation, the terminal device supports the first service, and the processor 501 is further configured to:
when the first cell does not support the first service, determine not to reselect or hand over to the first cell; or
when the first cell does not support the first service, set a priority of the first cell to a low priority, where the priority of the first cell is used as a sequence of selecting the first cell by the terminal device during cell reselection or handover.

All related content of the steps in the foregoing method embodiments may be cited in function descriptions of corresponding function modules, and details are not described herein again.

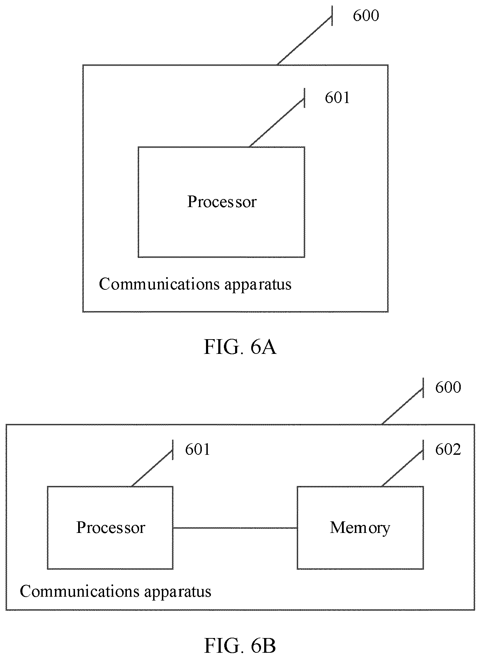

In a simple embodiment, a person skilled in the art may figure out that the foregoing several communications apparatuses may be further implemented by using a structure of a communications apparatus 600 shown in FIG. 6A. The communications apparatus 600 may implement functions of the terminal device or the network device described above. The communications apparatus 600 may include a processor 601.

When the communications apparatus 600 is configured to implement the functions of the terminal device described above, the processor 601 may be configured to perform S33 in the embodiment shown in FIG. 3 and/or another process used to support the technology described in this specification. Alternatively, when the communications apparatus 600 is configured to implement the functions of the network device described above, the processor 601 may be configured to perform S31 in the embodiment shown in FIG. 3 and/or another process used to support the technology described in this specification. Alternatively, when the communications apparatus 600 is configured to implement the functions of the terminal device described above, the processor 601 may be configured to perform S43 in the embodiment shown in FIG. 4 and/or another process used to support the technology described in this specification. Alternatively, when the communications apparatus 600 is configured to implement the functions of the network device described above, the processor 601 may be configured to perform S41 in the embodiment shown in FIG. 4 and/or another process used to support the technology described in this specification.

The communications apparatus 600 may be implemented by a field-programmable gate array (field-programmable gate array, FPGA), an application-specific integrated circuit (application-specific-integrated-circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip. The communications apparatus 600 may be disposed in the terminal device or network device in the embodiments of this application, so that the terminal device or the network device implements the method provided in the embodiments of this application.

In an optional implementation, the communications apparatus 600 may include a transceiver component, configured to communicate with another device. When the communications apparatus 600 is configured to implement the functions of the terminal device or the network device described above, the transceiver component may be configured to perform S32 in the embodiment shown in FIG. 3 and/or another process used to support the technology described in this specification. Alternatively, when the communications apparatus 600 is configured to implement the functions of the terminal device or the network device described above, the transceiver component may be configured to perform S42 in the embodiment shown in FIG. 4 and/or another process used to support the technology described in this specification.

In an optional implementation, referring to FIG. 6B, the communications apparatus 600 may further include a memory 602. The memory 602 is configured to store computer programs or instructions, and the processor 601 is configured to decode and execute the computer programs or the instructions. It should be understood that the computer programs or the instructions may include function programs of the terminal device or the network device described above. When the function programs of the terminal device are decoded and executed by the processor 601, the terminal device can implement the functions of the terminal device in the method provided in the embodiment shown in FIG. 3 in the embodiments of this application, or implement the functions of the terminal device in the method provided in the embodiment shown in FIG. 4 in the embodiments of this application. When the function programs of the network device are decoded and executed by the processor 601, the network device can implement the functions of the network device in the method provided in the embodiment shown in FIG. 3 in the embodiments of this application, or implement the functions of the network device in the method provided in the embodiment shown in FIG. 4 in the embodiments of this application.

In another optional implementation, the function programs of the terminal device or the network device are stored in an external memory of the communications apparatus 600. When the function programs of the terminal device are decoded and executed by the processor 601, the memory 602 temporarily stores a part or all of content of the function programs of the terminal device. When the function programs of the network device are decoded and executed by the processor 601, the memory 602 temporarily stores a part or all of content of the function programs of the network device.

In another optional implementation, the function programs of the terminal device or the network device are stored in the memory 602 inside the communications apparatus 600. When the memory 602 inside the communications apparatus 600 stores the function programs of the terminal device, the communications apparatus 600 may be disposed in the terminal device in the embodiments of this application. When the memory 602 inside the communications apparatus 600 stores the function programs of the network device, the communications apparatus 600 may be disposed in the network device in the embodiments of this application.

In still another optional implementation, a part of content of the function programs of the terminal device is stored in an external memory of the communications apparatus 600, and the other content of the function programs of the terminal device is stored in the memory 602 inside the communications apparatus 600. Alternatively, a part of content of the function programs of the network device is stored in an external memory of the communications apparatus 600, and the other content of the function programs of the network device is stored in the memory 602 inside the communications apparatus 600.

In the embodiments of this application, the communications apparatus 500 and the communications apparatus 600 are presented in a form in which each function module is obtained through division corresponding to each function, or may be presented in a form in which each function module is obtained through division in an integrated manner. The "module" herein may be anASIC, a processor and a memory that execute one or more software or firmware programs, an integrated logic circuit, and/or another component that can provide the foregoing functions.

In addition, the first communications apparatus described above may alternatively be implemented in another form. For example, the communications apparatus includes a processing module and a transceiver module. For example, the processing module may be implemented by the processor 501, and the transceiver module may be implemented by the transceiver 502. The processing module may be configured to perform S31 in the embodiment shown in FIG. 3 and/or another process used to support the technology described in this specification. The transceiver module may be configured to perform S32 in the embodiment shown in FIG. 3 and/or another process used to support the technology described in this specification.

For example, the processing module is configured to generate a first message, where the first message includes K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M.

The transceiver module is configured to send the first message in a first cell.

The one or more services include at least one of the following: a URLLC service, an eMBB service, and an mMTC service.

In a possible implementation, each of the K pieces of indication information is used to indicate whether one neighboring cell or one neighboring frequency supports one or more services.

In a possible implementation, K = 1, and the indication information is used to indicate whether the first cell supports one or more services.

In a possible implementation,
one of the K pieces of indication information includes N bits, where the N bits are used to indicate whether the first cell supports N services, each bit is used to indicate one service, and N is a positive integer; or
one of the K pieces of indication information includes H bits, where the H bits are used to indicate whether the first cell supports N services, each bit is used to indicate one or more services, H is a positive integer, N is an integer greater than or equal to 2, and H is less than N.

In a possible implementation, the transceiver module is further configured to send a second message in the first cell, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

The transceiver module is further configured to send a SIB1 message in the first cell, where a cellreservedforotheruse field in the SIB 1 is used to indicate that camping of a terminal device is rejected.

In a possible implementation, the first message is a SIB and/or a MIB.

In a possible implementation, the first message is a MIB, and a bit in cellbarred in the MIB is used for the K pieces of indication information, or a last bit in the MIB is used for the K pieces of indication information.

All related content of the steps in the foregoing method embodiments may be cited in function descriptions of corresponding function modules, and details are not described herein again.

The second communications apparatus described above may alternatively be implemented in another form. For example, the communications apparatus includes a processing module and a transceiver module. For example, the processing module may be implemented by the processor 501, and the transceiver module may be implemented by the transceiver 502. The processing module may be configured to perform S33 in the embodiment shown in FIG. 3 and/or another process used to support the technology described in this specification. The transceiver module may be configured to perform S32 in the embodiment shown in FIG. 3 and/or another process used to support the technology described in this specification.

For example, the transceiver module is configured to receive a first message from a network device.

The processing module is configured to determine, based on K pieces of indication information included in the first message, whether each of M pieces of first information supports a corresponding service, where each of the K pieces of indication information corresponds to one or more services, and is used to indicate whether one of the M pieces of first information supports the one or more services, the first information is cell information or frequency information, M is a positive integer, and K is an integer greater than or equal to M.

The one or more services include at least one of the following: a URLLC service, an eMBB service, and an mMTC service.

In a possible implementation, each of the K pieces of indication information is used to indicate whether one neighboring cell or one neighboring frequency supports one or more services.

In a possible implementation, K = 1, and the indication information is used to indicate whether a current cell supports one or more services.

In a possible implementation, the transceiver module is further configured to receive a second message from the network device, where the second message includes time information corresponding to the M pieces of first information, and the time information includes at least one of the following:
one piece of time information in the time information corresponds to one of the K pieces of indication information, where the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, where the one piece of time information is used to indicate that the one piece of first information supports the one service in a time period, and the one service is a service corresponding to indication information corresponding to the one piece of first information; or
one piece of time information in the time information corresponds to one of the K pieces of indication information, where the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, where the one piece of time information is used to indicate that the one piece of first information does not support the one service in a time period, and the one service is a service corresponding to indication information corresponding to the one piece of first information.

In a possible implementation,
one of the K pieces of indication information includes N bits, where the N bits are used to indicate whether the current cell supports N services, each bit is used to indicate one service, and N is a positive integer; or
one of the K pieces of indication information includes H bits, where the H bits are used to indicate whether the current cell supports N services, each bit is used to indicate one or more services, H is a positive integer, N is an integer greater than or equal to 2, and H is less than N.

The transceiver module is further configured to receive a SIB1 message from the network device, where a cellreservedforotheruse field in the SIB 1 is used to indicate that camping of a terminal device is rejected.

In a possible implementation, the first message is a SIB and/or a MIB.

In a possible implementation, the first message is a MIB, and a bit in cellbarred in the MIB is used for the K pieces of indication information, or a last bit in the MIB is used for the K pieces of indication information.

In a possible implementation, the terminal device supports a first service in the one or more services, and the processing module is further configured to: when performing cell reselection or cell handover, determine, based on the K pieces of first information, whether a second cell supports the first service.

In a possible implementation, the processing module is further configured to:
when the second cell does not support the first service, determine not to reselect or hand over to the second cell; or
when the second cell does not support the first service, set a priority of the second cell to a low priority, where the priority of the second cell is used as a sequence of selecting the second cell by the terminal device during cell reselection or handover.

All related content of the steps in the foregoing method embodiments may be cited in function descriptions of corresponding function modules, and details are not described herein again.

The third communications apparatus described above may alternatively be implemented in another form. For example, the communications apparatus includes a processing module and a transceiver module. For example, the processing module may be implemented by the processor 501, and the transceiver module may be implemented by the transceiver 502. The processing module may be configured to perform S41 in the embodiment shown in FIG. 4 and/or another process used to support the technology described in this specification. The transceiver module may be configured to perform S42 in the embodiment shown in FIG. 4 and/or another process used to support the technology described in this specification.

For example, the processing module is configured to generate a first message, where the first message includes K pieces of first information, the first message is used to indicate that the K pieces of first information support or do not support a first service, the first information is cell information or frequency information, and K is a positive integer.

The transceiver module is configured to send the first message.

All related content of the steps in the foregoing method embodiments may be cited in function descriptions of corresponding function modules, and details are not described herein again.

The fourth communications apparatus described above may alternatively be implemented in another form. For example, the communications apparatus includes a processing module and a transceiver module. For example, the processing module may be implemented by the processor 501, and the transceiver module may be implemented by the transceiver 502. The processing module may be configured to perform S43 in the embodiment shown in FIG. 4 and/or another process used to support the technology described in this specification. The transceiver module may be configured to perform S42 in the embodiment shown in FIG. 4 and/or another process used to support the technology described in this specification.

For example, the transceiver module is configured to receive a first message from a network device.

The processing module is configured to determine, based on K pieces of first information included in the first message, whether each of the K pieces of first information supports or does not support a first service, where the first information is cell information or frequency information, and K is a positive integer.

In a possible implementation, a terminal device supports the first service, and the processing module is further configured to: when performing cell reselection or cell handover, determine, based on the K pieces of first information, whether a first cell supports the first service.

In a possible implementation, the terminal device supports the first service, and the processing module is further configured to:
when the first cell does not support the first service, determine not to reselect or hand over to the first cell; or
when the first cell does not support the first service, set a priority of the first cell to a low priority, where the priority of the first cell is used as a sequence of selecting the first cell by the terminal device during cell reselection or handover.

All related content of the steps in the foregoing method embodiments may be cited in function descriptions of corresponding function modules, and details are not described herein again.

The first communications apparatus, the second communications apparatus, the third communications apparatus, the fourth communications apparatus, and the communications apparatus 600 provided in the embodiments of this application may be configured to perform the method provided in the embodiment shown in FIG. 3 or the method provided in the embodiment shown in FIG. 4. Therefore, for technical effects that can be achieved, refer to the foregoing method embodiments. Details are not described herein again.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of the any other programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state-drive, SSD)), or the like.

It is clear that, a person skilled in the art can make various modifications and variations to the embodiments of this application without departing from the scope of this application as defined by the appended claims. This application is intended to cover these modifications and variations provided that they fall within the scope of protection defined by the following claims**.**

## Claims

1. A message sending method performed by a network device (500), comprising:
generating (S31, S41) a first message (S32, S42), wherein the first message comprises K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M, and wherein the one or more services comprise at least one of the following: an ultra-reliable low-latency communication URLLC service, an enhanced mobile broadband eMBB service, a massive machine-type communications mMTC service, and a vehicle-to-everything V2X service;
sending the first message in a first cell to a terminal device (600); and
the method being **characterised in that** it further comprises:
sending a system information block SIB 1 message in the first cell, wherein the SIB 1 message comprises a cellreservedforotheruse field; and
wherein one of the cellreservedforotheruse field and the first message is used by the terminal device to determine whether to camp on the first cell.

2. The method according to claim 1, wherein the indication information is used to indicate whether the first cell supports one or more services.

3. The method according to claim 1 or 2, wherein
one of the K pieces of indication information comprises N bits, wherein the N bits are used to indicate whether the first cell supports N services, each bit is used to indicate one service, and N is a positive integer; or
one of the K pieces of indication information comprises H bits, wherein the H bits are used to indicate whether the first cell supports N services, each bit is used to indicate one or more services, H is a positive integer, N is an integer greater than or equal to 2, and H is less than N.

4. The method according to any one of claims 1 to 3, wherein the method further comprises:
sending a second message in the first cell, wherein the second message comprises time information corresponding to the M pieces of first information, and the time information comprises at least one of the following:
one piece of time information in the time information corresponds to one of the K pieces of indication information, wherein the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, wherein the one piece of time information is used to indicate that the one piece of first information supports the one service in a time period, and the one service is a service corresponding to indication information corresponding to the one piece of first information; or
one piece of time information in the time information corresponds to one of the K pieces of indication information, wherein the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, wherein the one piece of time information is used to indicate that the one piece of first information does not support the one service in a time period, and the one service is a service corresponding to indication information corresponding to the one piece of first information.

5. The method according to any one of claims 1 to 4, wherein the first message is a SIB and/or a master information block MIB.

6. A message receiving method performed by a terminal device (600), comprising:
receiving a first message (S32, S42) from a network device (500);
determining (S33, S43), based on K pieces of indication information comprised in the first message, whether each of M pieces of first information supports a corresponding service, wherein each of the K pieces of indication information corresponds to one or more services, and is used to indicate whether one of the M pieces of first information supports the one or more services, the first information is cell information or frequency information, M is a positive integer, and K is an integer greater than or equal to M, wherein the one or more services comprise at least one of the following: an ultra-reliable low-latency communication URLLC service, an enhanced mobile broadband eMBB service, a massive machine-type communications mMTC service, and a vehicle-to-everything V2X service; and
the method being **characterised in that** it further comprises:
receiving a system information block SIB 1 message, wherein the SIB 1 message comprises a cellreservedforotheruse field; and
wherein one of the cellreservedforotheruse field and the first message is used by the terminal device to determine whether to camp on the first cell.

7. The method according to claim 6, wherein the indication information is used to indicate whether a current cell supports one or more services.

8. The method according to claim 6, or 7, wherein
one of the K pieces of indication information comprises N bits, wherein the N bits are used to indicate whether the current cell supports N services, each bit is used to indicate one service, and N is a positive integer; or
one of the K pieces of indication information comprises H bits, wherein the H bits are used to indicate whether the current cell supports N services, each bit is used to indicate one or more services, H is a positive integer, N is an integer greater than or equal to 2, and H is less than N.

9. The method according to any one of claims 6 to 8, wherein the method further comprises:
receiving a second message from the network device, wherein the second message comprises time information corresponding to the M pieces of first information, and the time information comprises at least one of the following:
one piece of time information in the time information corresponds to one of the K pieces of indication information, wherein the one piece of time information is used to indicate that first information corresponding to the one piece of indication information supports one or more services corresponding to the one piece of indication information in a time period; or
one piece of time information in the time information corresponds to one service, and the one piece of time information corresponds to one piece of first information, wherein the one piece of time information is used to indicate that the one piece of first information supports the one service in a time period, and the one service is a service corresponding to indication information corresponding to the one piece of first information; or
one piece of time information in the time information corresponds to one of the K pieces of indication information, wherein the one piece of time information is used to indicate that first information corresponding to the one piece of indication information does not support one or more services corresponding to the one piece of indication information in a time period; or
one piece of time information in the time information corresponds to one service, and the one piece of time information corresponds to one piece of first information, wherein the one piece of time information is used to indicate that the one piece of first information does not support the one service in a time period, and the one service is a service corresponding to indication information corresponding to the one piece of first information.

10. The method according to any one of claims 6 to 9, wherein the first message is a MIB, and a bit in cellbarred cellbarred in the MIB is used for the K pieces of indication information, and/or a last bit in the MIB is used for the K pieces of indication information.

11. A network device (500), comprising:
an apparatus, configured to generate (S31, S41) a first message (S32, S42), wherein the first message comprises K pieces of indication information, the K pieces of indication information correspond to M pieces of first information, each of the K pieces of indication information corresponds to one or more services, and is used to indicate whether one of the M pieces of first information supports the one or more services, the first information is cell information or frequency information, M is a positive integer, and K is an integer greater than or equal to M, wherein the one or more services comprise at least one of the following: an ultra-reliable low-latency communication URLLC service, an enhanced mobile broadband eMBB service, a massive machine-type communications mMTC service, and a vehicle-to-everything V2X service;
the apparatus is configured to send the first message in a first cell to a terminal device (600); and
the network device being **characterised in that** it comprises:
the apparatus, configured to send a system information block SIB1 message in the first cell, wherein the SIB 1 message comprises a cellreservedforotheruse field; and
wherein one of the cellreservedforotheruse field and the first message is used by the terminal device to determine whether to camp on the first cell.

## Patentansprüche

1. Nachrichtensendeverfahren, das durch eine Netzwerkvorrichtung (500) durchgeführt wird, umfassend:
Generieren (S31, S41) einer ersten Nachricht (S32, S42), wobei die erste Nachricht K Einheiten von Anzeigeinformationen umfasst, wobei die K Einheiten von Anzeigeinformationen M Einheiten von ersten Informationen entsprechen, jede der K Einheiten von Anzeigeinformationen einem oder mehreren Diensten entspricht und verwendet wird, um anzuzeigen, ob eine der M Einheiten von ersten Informationen den einen oder die mehreren Dienste unterstützt, die ersten Informationen Zelleninformationen oder Frequenzinformationen sind, M eine positive ganze Zahl ist und K eine ganze Zahl größer als oder gleich M ist und wobei der eine oder die mehreren Dienste mindestens einen der Folgenden umfassen: einen Ultra-Reliable-Low-Latency-Communications-Dienst, URLLC-Dienst, einen Enhanced-Mobile-Broadband-Dienst, eMBB-Dienst, einen Massive-Machine-Type-Communications-Dienst, mMTC-Dienst, und einen Fahrzeug- zu-Allem-Dienst, V2X-Dienst;
Senden der ersten Nachricht in einer ersten Zelle an eine Endgerätevorrichtung (600); und
wobei das Verfahren **dadurch gekennzeichnet ist, dass** es ferner Folgendes umfasst:
Senden einer Systeminformationsblock-1-Nachricht, SIB-1-Nachricht, in der ersten Zelle, wobei die SIB-1-Nachricht ein Feld cellreservedforotheruse umfasst; und
wobei eines von dem Feld cellreservedforotheruse und der ersten Nachricht durch die Endgerätevorrichtung verwendet wird, um zu bestimmen, ob auf der ersten Zelle zu campen ist.

2. Verfahren nach Anspruch 1, wobei die Anzeigeinformationen verwendet werden, um anzuzeigen, ob die erste Zelle einen oder mehrere Dienste unterstützt.

3. Verfahren nach Anspruch 1 oder 2, wobei
eine der K Einheiten von Anzeigeinformationen N Bits umfasst, wobei die N Bits verwendet werden, um anzuzeigen, ob die erste Zelle N Dienste unterstützt, jedes Bit verwendet wird, um einen Dienst anzuzeigen, und N eine positive ganze Zahl ist; oder
eine der K Einheiten von Anzeigeinformationen H Bits umfasst, wobei die H Bits verwendet werden, um anzuzeigen, ob die erste Zelle N Dienste unterstützt, jedes Bit verwendet wird, um einen oder mehrere Dienste anzuzeigen, H eine positive ganze Zahl ist, N eine ganze Zahl größer als oder gleich 2 ist und H kleiner als N ist.

4. Verfahren nach einem der Ansprüche 1 bis 3, wobei das Verfahren ferner Folgendes umfasst:
Senden einer zweiten Nachricht in der ersten Zelle, wobei die zweite Nachricht Zeitinformationen umfasst, die den M Einheiten von ersten Informationen entsprechen, und die Zeitinformationen mindestens eines der Folgenden umfassen:
eine Einheit von Zeitinformation in den Zeitinformationen entspricht einer der K Einheiten von Anzeigeinformationen, wobei die eine Einheit von Zeitinformation verwendet wird, um anzuzeigen, dass die ersten Informationen, die der einen Einheit von Anzeigeinformationen entsprechen, in einem Zeitraum einen oder mehrere Dienste, die der einen Einheit von Anzeigeinformation entsprechen, unterstützen; oder
eine Einheit von Zeitinformation in den Zeitinformationen entspricht einem Dienst und die eine Einheit von Zeitinformationen entspricht einer Einheit von ersten Informationen, wobei die eine Einheit von Zeitinformationen verwendet wird, um anzuzeigen, dass die eine Einheit von ersten Informationen in einem Zeitraum den einen Dienst unterstützt, und der eine Dienst ein Dienst ist, der Anzeigeinformationen entspricht, die der einen Einheit von ersten Informationen entsprechen; oder
eine Einheit von Zeitinformation in den Zeitinformationen entspricht einer der K Einheiten von Anzeigeinformationen, wobei die eine Einheit von Zeitinformation verwendet wird, um anzuzeigen, dass die ersten Informationen, die der einen Einheit von Anzeigeinformationen entsprechen, in einem Zeitraum einen oder mehrere Dienste, die der einen Einheit von Anzeigeinformation entsprechen, nicht unterstützen; oder
eine Einheit von Zeitinformation in den Zeitinformationen entspricht einem Dienst und die eine Einheit von Zeitinformationen entspricht einer Einheit von ersten Informationen, wobei die eine Einheit von Zeitinformationen verwendet wird, um anzuzeigen, dass die eine Einheit von ersten Informationen in einem Zeitraum den einen Dienst nicht unterstützt, und der eine Dienst ein Dienst ist, der Anzeigeinformationen entspricht, die der einen Einheit von ersten Informationen entsprechen.

5. Verfahren nach einem der Ansprüche 1 bis 4, wobei die erste Nachricht ein SIB und/oder einen Hauptinformationsblock, MIB, ist.

6. Nachrichtenempfangsverfahren, das durch eine Endgerätevorrichtung (600) durchgeführt wird, umfassend:
Empfangen einer ersten Nachricht (S32, S42) von einer Netzwerkvorrichtung (500);
Bestimmen (S33, S43) auf Grundlage von K Einheiten von Anzeigeinformationen, die in der ersten Nachricht enthalten sind, ob jede der M Einheiten von ersten Informationen einen entsprechenden Dienst unterstützt, wobei jede der K Einheiten von Anzeigeinformationen einem oder mehreren Diensten entspricht und verwendet wird, um anzuzeigen, ob eine der M Einheiten von ersten Informationen den einen oder die mehreren Dienste unterstützt, die ersten Informationen Zelleninformationen oder Frequenzinformationen sind, M eine positive ganze Zahl ist und K eine ganze Zahl größer als oder gleich M ist, wobei der eine oder die mehreren Dienste mindestens einen der Folgenden umfassen: einen Ultra-Reliable-Low-Latency-Communications-Dienst, URLLC-Dienst, einen Enhanced-Mobile-Broadband-Dienst, eMBB-Dienst, einen Massive-Machine-Type-Communications-Dienst, mMTC-Dienst, und einen Fahrzeug- zu-Allem-Dienst, V2X-Dienst; und
wobei das Verfahren **dadurch gekennzeichnet ist, dass** es ferner Folgendes umfasst:
Empfangen einer Systeminformationsblock-1-Nachricht, SIB-1-Nachricht, wobei die SIB-1-Nachricht ein Feld cellreservedforotheruse umfasst; und
wobei eines von dem Feld cellreservedforotheruse und der ersten Nachricht durch die Endgerätevorrichtung verwendet wird, um zu bestimmen, ob auf der ersten Zelle zu campen ist.

7. Verfahren nach Anspruch 6, wobei die Anzeigeinformationen verwendet werden, um anzuzeigen, ob eine aktuelle Zelle einen oder mehrere Dienste unterstützt.

8. Verfahren nach Anspruch 6 oder 7, wobei
eine der K Einheiten von Anzeigeinformationen N Bits umfasst, wobei die N Bits verwendet werden, um anzuzeigen, ob die aktuelle Zelle N Dienste unterstützt, jedes Bit verwendet wird, um einen Dienst anzuzeigen, und N eine positive ganze Zahl ist; oder
eine der K Einheiten von Anzeigeinformationen H Bits umfasst, wobei die H Bits verwendet werden, um anzuzeigen, ob die aktuelle Zelle N Dienste unterstützt, jedes Bit verwendet wird, um einen oder mehrere Dienste anzuzeigen, H eine positive ganze Zahl ist, N eine ganze Zahl größer als oder gleich 2 ist und H kleiner als N ist.

9. Verfahren nach einem der Ansprüche 6 bis 8, wobei das Verfahren ferner Folgendes umfasst:
Empfangen einer zweiten Nachricht von der Netzwerkvorrichtung, wobei die zweite Nachricht Zeitinformationen umfasst, die den M Einheiten von ersten Informationen entsprechen, und die Zeitinformationen mindestens eines der Folgenden umfassen:
eine Einheit von Zeitinformation in den Zeitinformationen entspricht einer der K Einheiten von Anzeigeinformationen, wobei die eine Einheit von Zeitinformation verwendet wird, um anzuzeigen, dass die ersten Informationen, die der einen Einheit von Anzeigeinformationen entsprechen, in einem Zeitraum einen oder mehrere Dienste, die der einen Einheit von Anzeigeinformation entsprechen, unterstützen; oder
eine Einheit von Zeitinformation in den Zeitinformationen entspricht einem Dienst und die eine Einheit von Zeitinformationen entspricht einer Einheit von ersten Informationen, wobei die eine Einheit von Zeitinformationen verwendet wird, um anzuzeigen, dass die eine Einheit von ersten Informationen in einem Zeitraum den einen Dienst unterstützt, und der eine Dienst ein Dienst ist, der Anzeigeinformationen entspricht, die der einen Einheit von ersten Informationen entsprechen; oder
eine Einheit von Zeitinformation in den Zeitinformationen entspricht einer der K Einheiten von Anzeigeinformationen, wobei die eine Einheit von Zeitinformation verwendet wird, um anzuzeigen, dass die ersten Informationen, die der einen Einheit von Anzeigeinformationen entsprechen, in einem Zeitraum einen oder mehrere Dienste, die der einen Einheit von Anzeigeinformation entsprechen, nicht unterstützen; oder
eine Einheit von Zeitinformation in den Zeitinformationen entspricht einem Dienst und die eine Einheit von Zeitinformationen entspricht einer Einheit von ersten Informationen, wobei die eine Einheit von Zeitinformationen verwendet wird, um anzuzeigen, dass die eine Einheit von ersten Informationen in einem Zeitraum den einen Dienst nicht unterstützt, und der eine Dienst ein Dienst ist, der Anzeigeinformationen entspricht, die der einen Einheit von ersten Informationen entsprechen.

10. Verfahren nach einem der Ansprüche 6 bis 9, wobei die erste Nachricht ein MIB ist und ein Bit in cellbarred cellbarred in dem MIB für die K Einheiten von Anzeigeinformationen verwendet wird und/oder ein letztes Bit in dem MIB für die K Einheiten von Anzeigeinformationen verwendet wird.

11. Netzwerkvorrichtung (500), umfassend:
eine Einrichtung, die dazu konfiguriert ist, eine erste Nachricht (S32, S42) zu generieren (S31, S41), wobei die erste Nachricht K Einheiten von Anzeigeinformationen umfasst, wobei die K Einheiten von Anzeigeinformationen M Einheiten von ersten Informationen entsprechen, jede der K Einheiten von Anzeigeinformationen einem oder mehreren Diensten entspricht und verwendet wird, um anzuzeigen, ob eine der M Einheiten von ersten Informationen den einen oder die mehreren Dienste unterstützt, die ersten Informationen Zelleninformationen oder Frequenzinformationen sind, M eine positive ganze Zahl ist und K eine ganze Zahl größer als oder gleich M ist, wobei der eine oder die mehreren Dienste mindestens eines der Folgenden umfassen: einen Ultra-Reliable-Low-Latency-Communications-Dienst, URLLC-Dienst, einen Enhanced-Mobile-Broadband-Dienst, eMBB-Dienst, einen Massive-Machine-Type-Communications-Dienst, mMTC-Dienst, und einen Fahrzeug- zu-Allem-Dienst, V2X-Dienst;
wobei die Einrichtung dazu konfiguriert ist, die erste Nachricht in einer ersten Zelle an eine Endgerätevorrichtung (600) zu senden; und
wobei die Netzwerkvorrichtung **dadurch gekennzeichnet ist, dass** sie Folgendes umfasst:
die Einrichtung, die dazu konfiguriert ist, eine Systeminformationsblock-1-Nachricht, SIB-1-Nachricht, in der ersten Zelle zu senden, wobei die SIB-1-Nachricht ein Feld cellreservedforotheruse umfasst; und
wobei eines von dem Feld cellreservedforotheruse und der ersten Nachricht durch die Endgerätevorrichtung verwendet wird, um zu bestimmen, ob auf der ersten Zelle zu campen ist.

## Revendications

1. Procédé d'envoi de messages exécuté par un dispositif de réseau (500), comprenant :
la génération (S31, S41) d'un premier message (S32, S42), dans lequel le premier message comprend K éléments d'informations d'indication, les K éléments d'informations d'indication correspondent à M éléments de premières informations, chacun des K éléments d'informations d'indication correspond à un ou plusieurs services, et est utilisé pour indiquer si l'un des M éléments de premières informations prend en charge les un ou plusieurs services, les premières informations sont des informations de cellule ou des informations de fréquence, M est un entier positif, et K est un entier supérieur à ou égal à M, et dans lequel les un ou plusieurs services comprennent au moins l'un de ce qui suit : un service URLLC de communication à faible latence ultra-fiable, un service eMBB à haut débit mobile amélioré, un service mMTC de communications massives de type machine et un service V2X véhicule-à-tout ;
l'envoi du premier message dans une première cellule à un dispositif terminal (600) ; et
le procédé étant **caractérisé en ce qu'**il comprend en outre :
l'envoi d'un message SIB1 de bloc d'informations système dans la première cellule, dans lequel le message SIB1 comprend un champ de cellule réservée à une autre utilisation « cellreservedforotheruse » ; et
dans lequel l'un parmi le champ « cellreservedforotheruse » et le premier message est utilisé par le dispositif terminal pour déterminer s'il faut se domicilier sur la première cellule.

2. Procédé selon la revendication 1, dans lequel les informations d'indication sont utilisées pour indiquer si la première cellule prend en charge un ou plusieurs services.

3. Procédé selon la revendication 1 ou 2, dans lequel
l'un des K éléments d'informations d'indication comprend N bits, dans lequel les N bits sont utilisés pour indiquer si la première cellule prend en charge N services, chaque bit est utilisé pour indiquer un service, et N est un entier positif ; ou
l'un des K éléments d'informations d'indication comprend H bits, dans lequel les H bits sont utilisés pour indiquer si la première cellule prend en charge N services, chaque bit est utilisé pour indiquer un ou plusieurs services, H est un entier positif, N est un entier supérieur ou égal à 2, et H est inférieur à N.

4. Procédé selon l'une quelconque des revendications 1 à 3, dans lequel le procédé comprend en outre :
l'envoi d'un second message dans la première cellule, dans lequel le second message comprend des informations de temps correspondant aux M éléments de premières informations, et les informations de temps comprennent au moins l'un de ce qui suit :
un élément d'informations de temps dans les informations de temps correspond à l'un des K éléments d'informations d'indication, dans lequel l'élément d'informations de temps est utilisé pour indiquer que des premières informations correspondant à l'élément d'informations d'indication prend en charge un ou plusieurs services correspondant à l'élément d'informations d'indication dans une période de temps ; ou
un élément d'informations de temps dans les informations de temps correspond à un service, et l'élément d'informations de temps correspond à un élément de premières informations, dans lequel l'élément d'informations de temps est utilisé pour indiquer que l'élément de premières informations prend en charge le service dans une période de temps, et le service est un service correspondant à des informations d'indication correspondant à l'élément de premières informations ; ou
un élément d'informations de temps dans les informations de temps correspond à l'un des K éléments d'informations d'indication, dans lequel l'élément d'informations de temps est utilisé pour indiquer que des premières informations correspondant à l'élément d'informations d'indication ne prend pas en charge un ou plusieurs services correspondant à l'élément d'informations d'indication dans une période de temps ; ou
un élément d'informations de temps dans les informations de temps correspond à un service, et l'élément d'informations de temps correspond à un élément de premières informations, dans lequel l'élément d'informations de temps est utilisé pour indiquer que l'élément de premières informations ne prend pas en charge le service dans une période de temps, et le service est un service correspondant à des informations d'indication correspondant à l'élément de premières informations.

5. Procédé selon l'une quelconque des revendications 1 à 4, dans lequel le premier message est un SIB et/ou un bloc d'informations maître MIB.

6. Procédé de réception de message exécuté par un dispositif terminal (600), comprenant :
la réception d'un premier message (S32, S42) provenant d'un dispositif de réseau (500) ;
le fait de déterminer (S33, S43), sur la base de K éléments d'informations d'indication compris dans le premier message, si chacun des M éléments de premières informations prend en charge un service correspondant, dans lequel chacun des K éléments d'informations d'indication correspond à un ou plusieurs services, et est utilisé pour indiquer si l'un des M éléments de premières informations prend en charge les un ou plusieurs services, les premières informations sont des informations de cellule ou des informations de fréquence, M est un entier positif, et K est un entier supérieur ou égal à M, dans lequel les un ou plusieurs services comprennent au moins l'un de ce qui suit : un service URLLC de communication à faible latence ultra-fiable, un service eMBB à haut débit mobile amélioré, un service mMTC de communications massives de type machine et un service V2X véhicule-à-tout ; et
le procédé étant **caractérisé en ce qu'**il comprend en outre :
la réception d'un message SIB1 de bloc d'informations système, dans lequel le message SIB1 comprend un champ « cellreservedforotheruse » ; et
dans lequel l'un parmi le champ « cellreservedforotheruse » et le premier message est utilisé par le dispositif terminal pour déterminer s'il faut se domicilier sur la première cellule.

7. Procédé selon la revendication 6, dans lequel les informations d'indication sont utilisées pour indiquer si une cellule actuelle prend en charge un ou plusieurs services.

8. Procédé selon la revendication 6 ou 7, dans lequel
l'un des K éléments d'informations d'indication comprend N bits, dans lequel les N bits sont utilisés pour indiquer si la cellule actuelle prend en charge N services, chaque bit est utilisé pour indiquer un service, et N est un entier positif ; ou
l'un des K éléments d'informations d'indication comprend H bits, dans lequel les H bits sont utilisés pour indiquer si la cellule actuelle prend en charge N services, chaque bit est utilisé pour indiquer un ou plusieurs services, H est un entier positif, N est un entier supérieur ou égal à 2, et H est inférieur à N.

9. Procédé selon l'une quelconque des revendications 6 à 8, dans lequel le procédé comprend en outre :
la réception d'un second message provenant du dispositif de réseau, dans lequel le second message comprend des informations de temps correspondant aux M éléments de premières informations, et les informations de temps comprennent au moins l'un de ce qui suit :
un élément d'informations de temps dans les informations de temps correspond à l'un des K éléments d'informations d'indication, dans lequel l'élément d'informations de temps est utilisé pour indiquer que des premières informations correspondant à l'élément d'informations d'indication prend en charge un ou plusieurs services correspondant à l'élément d'informations d'indication dans une période de temps ; ou
un élément d'informations de temps dans les informations de temps correspond à un service, et l'élément d'informations de temps correspond à un élément de premières informations, dans lequel l'élément d'informations de temps est utilisé pour indiquer que l'élément de premières informations prend en charge le service dans une période de temps, et le service est un service correspondant à des informations d'indication correspondant à l'élément de premières informations ; ou
un élément d'informations de temps dans les informations de temps correspond à l'un des K éléments d'informations d'indication, dans lequel l'élément d'informations de temps est utilisé pour indiquer que des premières informations correspondant à l'élément d'informations d'indication ne prend pas en charge un ou plusieurs services correspondant à l'élément d'informations d'indication dans une période de temps ; ou
un élément d'informations de temps dans les informations de temps correspond à un service, et l'élément d'informations de temps correspond à un élément de premières informations, dans lequel l'élément d'informations de temps est utilisé pour indiquer que l'élément de premières informations ne prend pas en charge le service dans une période de temps, et le service est un service correspondant à des informations d'indication correspondant à l'élément de premières informations.

10. Procédé selon l'une quelconque des revendications 6 à 9, dans lequel le premier message est un MIB, et un bit dans une cellule interdite « cellbarred » dans le MIB est utilisé pour les K éléments d'informations d'indication, et/ou un dernier bit dans le MIB est utilisé pour les K éléments informations d'indication.

11. Dispositif de réseau (500), comprenant :
un appareil, configuré pour générer (S31, S41) un premier message (S32, S42), dans lequel le premier message comprend K éléments d'informations d'indication, les K éléments d'informations d'indication correspondent à M éléments de premières informations, chacun des K éléments d'informations d'indication correspond à un ou plusieurs services, et est utilisé pour indiquer si l'un des M éléments de premières informations prend en charge les un ou plusieurs services, les premières informations sont des informations de cellule ou des informations de fréquence, M est un entier positif, et K est un entier supérieur à ou égal à M, et dans lequel les un ou plusieurs services comprennent au moins l'un de ce qui suit :
un service URLLC de communication à faible latence ultra-fiable, un service eMBB à haut débit mobile amélioré, un service mMTC de communications massives de type machine et un service V2X véhicule-à-tout ;
l'appareil est configuré pour envoyer le premier message dans une première cellule à un dispositif terminal (600) ; et
le dispositif de réseau étant **caractérisé en ce qu'**il comprend : l'appareil, configuré pour envoyer un message SIB1 de bloc d'informations système dans la première cellule, dans lequel le message SIB1 comprend un champ « cellreservedforotheruse » ; et dans lequel l'un parmi le champ « cellreservedforotheruse » et le premier message est utilisé par le dispositif terminal pour déterminer s'il faut se domicilier sur la première cellule.
